(19) Europäisches Patentamt
European Patent Office
Office européen des brevets

(11) EP 4 477 623 A1

(12) EUROPEAN PATENT APPLICATION

(43) Date of publication:
**18.12.2024 Bulletin 2024/51**

(21) Application number: **24175548.7**

(22) Date of filing: **13.05.2024**

(51) International Patent Classification (IPC):
***C01G 53/00*** *(2006.01)*

(52) Cooperative Patent Classification (CPC):
**C01G 53/50;** C01P 2002/85; C01P 2004/50; C01P 2004/61; C01P 2006/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.05.2023 KR 20230063117**

(71) Applicants:
- **SK Innovation Co., Ltd.**
  **Seoul 03188 (KR)**
- **SK On Co., Ltd.**
  **Seoul 03161 (KR)**

(72) Inventors:
- **PARK, Sang Min**
  **Daejeon 34124 (KR)**
- **KWON, Oh Hun**
  **Daejeon 34124 (KR)**
- **KIM, Sang Bok**
  **Daejeon 34124 (KR)**
- **JANG, Dong Il**
  **Daejeon 34124 (KR)**
- **JANG, Ji Hye**
  **Daejeon 34124 (KR)**
- **CHOI, Jae Young**
  **Daejeon 34124 (KR)**

(74) Representative: **Stolmár & Partner Patentanwälte PartG mbB**
**Blumenstraße 17**
**80331 München (DE)**

# (54) CATHODE ACTIVE MATERIAL FOR LITHIUM SECONDARY BATTERY AND LITHIUM SECONDARY BATTERY INCLUDING THE SAME

(57) A cathode active material for a lithium secondary battery includes a lithium-nickel metal oxide particle having a form of a secondary particle in which a plurality of primary particles are aggregated therein. The lithium-nickel metal oxide particle includes a penetration region formed in an area extending from a surface to a point 70% or less of a radius of the particle in a direction to a center of the particle. The penetration region includes a tungsten compound at an interface between the primary particles. A relative standard deviation (RSD) value calculated from results of measuring a tungsten content from the surface of the secondary particle to a depth of 10 nm 10 times at different points using an X-ray Photoelectron Spectroscopy (XPS) is in a range from 10% to 40%.



Processed by Luminess, 75001 PARIS (FR)

## Description

CROSS-REFERENCE TO RELATED APPLICATION AND CLAIM OF PRIORITY

This application claims priority to Korean Patent Application No. 10-2023-0063117 filed on May 16, 2023 in the Korean Intellectual Property Office (KIPO), the entire disclosure of which is incorporated by reference herein.

TECHNICAL FIELD

The disclosure of this patent application relates to a cathode active material for a lithium secondary battery and a lithium secondary battery including the same.

BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an electric automobile.

Examples of the secondary battery include a lithium secondary battery, a nickelcadmium battery, a nickel-hydrogen battery, etc. The lithium secondary battery is being actively developed and applied due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape accommodating the electrode assembly and the electrolyte.

A lithium-transition metal oxide may be used as an active material for a cathode of a lithium secondary battery. An example of the lithium-transition metal oxide may include a nickel-based lithium metal oxide. A capacity of the battery may be increased by including a content of nickel in the nickel-based lithium metal oxide.

However, if the nickel content increases, structural stability of the nickel-based metal oxide and life-span properties of the battery may be lowered during repeated charging and discharging of the battery.

SUMMARY

According to an aspect of the present disclosure, there is provided a cathode active material for a lithium secondary battery having improved structural stability.

According to an aspect of the present invention, there is provided a lithium secondary battery including a cathode active material with enhanced structural stability.

A cathode active material for a lithium secondary battery includes a lithium-nickel metal oxide particle having a form of a secondary particle in which a plurality of primary particles are aggregated therein. The lithium-nickel metal oxide particle includes a penetration region formed in an area extending from a surface to a point 70% or less of a radius of the particle in a direction to a center of the particle. The penetration region includes a tungsten compound at an interface between the primary particles. A relative standard deviation (RSD) value calculated from results of measuring a tungsten content from the surface of the secondary particle to a depth of 10 nm 10 times at different points using an X-ray Photoelectron Spectroscopy (XPS) is in a range from 10% to 40%.

In some embodiments, the relative standard deviation value may be in a range from 20% to 30%.

In some embodiments, a thickness of the penetration region may correspond to 10% to 55% of the radius of the secondary particle in the direction from the surface to the center of the particle.

In some embodiments, the lithium-nickel metal oxide particle includes a chemical structure represented by Chemical Formula 1.

[Chemical Formula 1] $Li_a[Ni_bCo_cMn_dX_y]O_e$

In Chemical Formula 1, X includes at least one of W, S, Al, Ti, Sr, Zr, P and K, $0.5<a<1.5$, $0.8<b\leq 1$, $0<c<0.1$, $0<d<0.1$, $1.5<e<2.5$, and $0<y<0.1$.

In some embodiments, the tungsten compound may include a lithium-tungsten oxide.

In some embodiments, the lithium-tungsten oxide may be represented by Chemical Formula 2.

[Chemical Formula 2] $Li_xW_yO_z$

In Chemical Formula 2, $0<x\leq3$, $0<y\leq5$, and $0<z\leq8$.

In some embodiments, a content of tungsten based on a total weight of the lithium-nickel metal oxide particle may be in a range from 500 ppm to 10,000 ppm.

In some embodiments, a content of tungsten based on a total weight of the lithium-nickel metal oxide particle may be in a range from 1,000 ppm to 5,000 ppm.

In some embodiments, at least a portion of the plurality of primary particles in the penetration region may include a rock-salt region, and a thickness of the rock-salt region may be in a range from 5 nm to 10 nm in a direction from a surface to a center of the primary particle.

In some embodiments, an average particle diameter (D50) of the lithium-nickel metal oxide particle may be in a range from 10 μm to 30 μm.

In some embodiments, a resistivity defined by Equation 1 may be in a range from 30 Ω cm to 120 Ω cm.

[Equation 1]

$$\rho = 4 \times r \times R_{sp}$$

In Equation 1, ρ is the resistivity, $R_{sp}$ is an average value of spreading resistances of the lithium-nickel metal oxide particle measured from a spreading resistance distribution image obtained in a scanning spreading resistance microscopy (SSRM) mode by contacting a tip coated with a conductive component of an atomic force microscope (AFM) to a region of 200 nm X 200 nm in a cross-section of a cathode including the cathode active material and applying a voltage of 3V, and r is a contact radius of the tip.

In some embodiments, the resistivity may be in a range from 40 Ω·cm to 105 Ω·cm.

A lithium secondary battery includes a cathode including the above-described cathode active material for a lithium secondary battery, and an anode facing the cathode.

A cathode active material for a lithium secondary battery according to example embodiments may include a secondary particle including primary particles formed as a lithium-nickel metal oxide. As an inner region formed from a surface of the secondary particle, a penetration region including a tungsten compound may be formed at an interface between the primary particles.

Accordingly, the tungsten compound may improve a lithium ion conductivity between the primary particles, thereby reducing a resistance in the cathode active material. Additionally, structural stability of the cathode active material including the tungsten compound may be improved, so that gas generation due to collapse of a layered structure of the cathode active material and a surface side reaction with an electrolyte may be effectively reduced.

A lithium secondary battery according to example embodiments includes the cathode active material, and may have improved charge/discharge efficiency and power properties. Additionally, even during repeated charging and discharging, structural collapse of the cathode active material may be suppressed, thereby improving life-span properties, and an increase of an internal resistance (IR) during repeated charging and discharging may be suppressed.

The cathode active material and the lithium secondary battery of the present disclosure may be widely applied in green technology fields such as an electric vehicle, a battery charging station, a solar power generation, a wind power generation, etc., using a battery, etc. The cathode active material and the lithium secondary battery according to the present disclosure may be used for eco-friendly electric vehicles and hybrid vehicles to prevent a climate change by suppressing air pollution and greenhouse gas emissions. etc.

BRIEF DESCRIPTION OF THE DRAWINGS

FIGS. 1 and FIGS. 2 are a schematic plan view and a schematic cross-sectional view, respectively, of a lithium secondary battery in accordance with example embodiments, respectively.

FIG. 3 shows a transmission electron microscope (TEM) image and an Energy-dispersive X-ray Spectrometer (EDS) tungsten element mapping image of a cathode active material of Example 3.

FIG. 4 shows a TEM image and an EDS tungsten element mapping image of a cathode active material in Comparative Example 1.

FIG. 5 shows a TEM image and an EDS tungsten element mapping image of a cathode active material of Comparative Example 2.

FIG. 6 shows a TEM image and an EDS tungsten element mapping image of a cathode active material in Comparative Example 3.

FIG. 7 shows a TEM image and an EDS tungsten element mapping image of a cathode active material of Comparative Example 4.
FIG. 8 shows an EDS spectrum of a surface portion of a cathode active material of Example 3.
FIGS. 9 and 10 show EDS spectra at two internal points of a cathode active material of Example 3.
FIG. 11 shows an EDS spectrum of a surface portion of a cathode active material of Comparative Example 1.
FIG. 12 shows an EDS spectrum at an inside of a cathode active material of Comparative Example 1.
FIG. 13 shows a TEM image and a selected area electron diffraction (SAED) image of a cathode active material of Example 3.
FIG. 14 shows a TEM image and an SAED image of a cathode active material of Comparative Example 1.
FIG. 15 shows scanning spreading resistance microscope (SSRM) spreading resistance distribution images of cathode cross-sections of Examples 1 to 3, Comparative Examples 1 to 4 and Reference Example.
FIG. 16 is an average graph of spreading resistance of cathode active materials of Examples 1 to 3, Comparative Example 1 and Reference Example.

DETAILED DESCRIPTION OF THE EMBODIMENTS

According to example embodiments of the present disclosure, a cathode active material for a lithium secondary battery and a lithium secondary battery including the cathode active material are provided.

Hereinafter, embodiments of the present disclosure will be described in detail with reference to exemplary embodiments and the accompanying drawings. However, those skilled in the art will appreciate that such embodiments and drawings are provided to further understand the spirit of the present invention and do not limit subject matters to be protected as disclosed in the detailed description and appended claims.

A cathode active material for a lithium secondary battery in accordance with example embodiments (hereinafter, abbreviated as "a cathode active material") may include a lithium-nickel metal oxide particles.

The cathode active material may include a plurality of particles of a lithium-nickel metal oxide. For example, an amount of the particles of the lithium-nickel metal oxide based on a total weight of the cathode active material may be 50 weight percent (wt%) or more. In some examples, the amount of the particles of the lithium-nickel metal oxide based on the total weight of the cathode active material may be 60 wt% or more, 70 wt% or more, 80 wt% or more, or 90 wt% or more.

In an embodiment, the cathode active material may substantially consist of the particles of the lithium-nickel metal oxide.

For example, the lithium-nickel metal oxide may be a metal oxide containing lithium and nickel, and may further include other transition metals. For example, the transition metal may include cobalt or manganese.

In example embodiments, the cathode active material for a lithium secondary battery or the lithium-nickel metal oxide may be represented by Chemical Formula 1.

[Chemical formula 1] $Li_a[Ni_bCo_cMn_dX_y]O_e$

In Chemical Formula 1, X may include at least one of W, S, Al, Ti, Sr, Zr, P, and K, and $0.5<a<1.5$, $0.8<b\leq 1$, $0<c<0.1$, $0<d<0.1$, $1.5<e<2.5$, and $0<y<0.1$.

The chemical structure represented by Chemical Formula 1 represents a bonding relation included in a layered structure or a crystal structure of the cathode active material including the lithium-nickel metal oxide, and does not exclude another additional element. Chemical Formula 1 is provided to express the bonding relation of active elements and is to be understood to encompass an introduction and a substitution of the additional element.

In an embodiment, an auxiliary elements for enhancing chemical stability of the cathode active material or the layered structure/crystal structure may be further included in addition to the active element. The auxiliary element may be mixed together in the layered structure/crystal structure to form a bond, and it is to be understood that this case is also included within the range of the chemical structure represented by Chemical Formula 1.

The auxiliary element may include at least one of, e.g., W, Na, Mg, Ca, Y, Ti, Hf, V, Nb, Ta, Cr, Mo, Fe, Cu, Ag, Zn, B, Al, Ga, C, Si, Sn, Sr, Ba, Ra, P and Zr. The auxiliary element may act as an auxiliary active element such as Al contributing to structural stability/power activity of the cathode active material together with Co or Mn.

The cathode active material may further include a coating element or a doping element. For example, elements substantially the same as or similar to the above-described auxiliary elements may be used as the coating element or the doping element. For example, the above-mentioned auxiliary elements may be used alone or in a combination of two or more therefrom as the coating element or the doping element.

The coating element or the doping element may be present on a surface of the lithium-nickel metal oxide particles or may penetrate through the surface of the lithium-nickel metal oxide particle to be included in the bonding structure represented by Chemical Formula 1.

In example embodiments, the lithium-nickel metal oxide particle may have the form of a secondary particle in

which a plurality of primary particles are aggregated therein. The term "primary particle" used herein may refer to a single particle that may exist alone without forming an aggregate. The term "secondary particle" herein may refer to a particle having a structure in which the primary particles are aggregated therein.

In example embodiments, the lithium-nickel metal oxide particle may include a penetration region formed in a region from a surface of the particle to a point at 70% or less of a radius in a direction to a center of the particle. The penetration region may include a tungsten compound at an interface between the primary particles.

In some embodiments, the penetrating region may include a surface portion of the cathode active material. The term "surface portion" used herein may refer toa region from an outer surface of the particle to a point where a radius is 30% or less in a direction of a center of the particle. For example, the surface portion of the secondary particle may refer to a region having a distance of about 5 μm from an outer surface of the secondary particle in a direction to a center of the particle. A surface portion of the primary particle may refer to a region having a distance of about 10 nm from an outer surface of the primary particle in a direction to a center of the particle.

In some embodiments, a thickness of the penetration region may correspond to 70% or less of a radius of the secondary particle from the surface of the secondary particle in a direction of the particle center. In some embodiments, the thickness of the penetration region may correspond to 10% to 55% of the radius of the secondary particle from the surface of the secondary particle in a direction of the particle center For example, the thickness of the penetration region may correspond to 40% to 55% of the radius of the secondary particle from the surface of the secondary particle in a direction of the particle center

The penetration region may be present in the region from the surface of the cathode active material to an inner region within the above range, so that the tungsten compound may increase a lithium ion conductivity at the interface between the primary particles, and may improve structural stability of the cathode active material during repeated charging and discharging of the battery.

In example embodiments, the tungsten compound may include a lithium-tungsten oxide.

In example embodiments, the lithium-tungsten oxide may be represented by Chemical Formula 2.

[Chemical formula 2] $Li_xW_yO_z$

In Chemical Formula 2, $0<x\leq3$, $0<y\leq5$, and $0<z\leq8$.

The lithium-tungsten oxide above may be present at the interface of the primary particles of the cathode active material, so that the lithium ion conductivity at an inside of the cathode active material may be effectively improved to reduce a resistance of the cathode active material. Accordingly, even when charging and discharging are repeated, a lithium ion mobility may be enhanced to reduce the resistance of the cathode active material, and a capacity reduction may be prevented.

In example embodiments, a relative standard deviation (RSD) calculated by measuring tungsten contents from the surface of the secondary particle to a depth of 10 nm at different 10 points by an X-ray photoelectron spectroscopy (XPS) of the cathode active material for a lithium secondary battery may be in a range from 10% to 40%. In some embodiments, the relative standard deviation (RSD) value may be in a range from 20% to 30%.

The relative standard deviation is a percentage of a standard deviation value with respect to an average value of specific data. The relative standard deviation may be used as an index of a relative distribution of data, and a relative standard deviation close to zero indicates uniform data.

When the relative standard deviation value is less than 10%, a tungsten element distribution may be uniformly distributed at a surface portion of the cathode active material particle. For example, the input tungsten element may not penetrate into the cathode active material particle to be concentrated at the surface portion, the tungsten content becomes uniform at the surface portion, and the penetration region may not be substantially formed at an inside of the particle.

Accordingly, the tungsten compound may be generally concentrated or present at the surface portion than at the inside of the cathode active material particle, and the lithium-tungsten oxide formed at the surface of the cathode active material particle may increase a thickness of a rock salt phase. Accordingly, a surface resistance of the cathode active material may be increased, thereby increasing an entire resistance of an electrode, and lowering charge/discharge efficiency properties of the battery.

In example embodiments, the XPS may be performed on the cathode active material particles. For example, the XPS may be performed using ESCALAB 250Xi (ThermoScientific) as an analysis device, but is not limited thereto. The XPS analysis may be performed under the following conditions.

1) X-ray type: Source - Al k alpha, 1486.68eV, 900um Beam size
Analyzer: CAE Mode
2) Scan conditions (including Al2p and Nals):

Number of scans: 20 to 50

Pass energy: 20 eV
Dwell time: 50 to 100 ms
Energy step: 0.1 eV

In example embodiments, a content of tungsten based on the total weight of the lithium-nickel metal oxide particle may be in a range from 500 ppm to 10,000 ppm. In some embodiments, the content of tungsten based on the total weight of the lithium-nickel metal oxide particle may be in a range from 500 ppm to 10,000 ppm, from 1,000 to 10,000 ppm, from 3,000 to 10,000 ppm, or from 1,000 to 5,000 ppm.

In the above range of the tungsten content, the lithium secondary battery having high charge and discharge capacity and improved power properties may be effectively implemented.

In example embodiments, the penetration region may include a rock-salt region. The rock salt phase may be formed of the tungsten compound. For example, the lithium-tungsten oxide may directly form a rock salt phase, or a metal and/or an oxygen of the lithium-nickel metal oxide may be dissolved to form a tungsten compound rock-salt phase together with a tungsten component.

In example embodiments, at least portion of a plurality of the primary particles in the penetration region may include the rock-salt region formed from the surface in a direction to the center. In some embodiments, tungsten may penetrate from the surface of the primary particle toward the center to form the rock-salt region.

In example embodiments, a thickness of the rock-salt region may be in a range from 5 nm to 10 nm from the surface in the direction to the center of the primary particle. In the above thickness range of the rock-salt region, structural stability of the cathode active material may be improved while suppressing an excessive increase of surface and internal resistances, and high-temperature stability and life-span properties of the cathode active material may be enhanced.

In example embodiments, an average particle diameter (D50) of the secondary particles may be in a range from 10 μm to 30 μm. In some embodiments, the average particle diameter (D50) of the secondary particles may be in a range from 10 μm to 20 μm. In the above range of the average particle diameter, a density of the cathode active material in the cathode active material layer may be increased while also increasing an entire surface area of the cathode active material. Accordingly, the high-capacity lithium secondary battery may be implemented. The "average particle diameter (D50)" may refer to a particle diameter corresponding to 50% of a volume fraction in a cumulative volume distribution.

In example embodiments, a cathode active material for a lithium secondary battery above may have a resistivity defined by Equation 1 below ranging from 30 Ω·cm to 120 Ω·cm. In some embodiments, the resistivity above may be in a range from 40 Ω·cm to 105 Ω·cm.

[Equation 1]

$$\rho = 4 \times r \times R_{sp}$$

In Equation 1, ρ is the resistivity, $R_{sp}$ is an average value of spreading resistances of the cathode active material measured from a spreading resistance distribution image obtained in a scanning spreading resistance microscopy (SSRM) mode by contacting a tip coated with a conductive component of an atomic force microscope (AFM) to a region of 200 nm X 200 nm in a cross-section of a cathode including the cathode active material and applying a voltage of 3V, and r is a contact radius of the tip.

The conductive tip may be in contact with the surface of the sample using the AFM and scanned so that a current flow through an entire area of the sample surface, and an amount of the current for a applied voltage in a local area in contact with the tip can be measured to obtain a resistance distribution image with high resolution.

A local resistance obtained by two-dimensionally measuring the distribution of resistance values in the SSRM mode may be defined as a spreading resistance. The spreading resistance may be visualized to obtain an image in which highs and lows of the resistance values are expressed in a contrast of color. The image of the spreading resistance distribution may be measured using, e.g., an AFM manufactured by Bruker.

An average spreading resistance value of the cathode active material may be calculated from the spreading resistance distribution image. For example, in the spreading resistance distribution image, a resistance distribution for cross-sections of a plurality of lithium-nickel metal oxide particles may be expressed. From the resistance distribution, a resistance of the cross-section of each lithium-nickel metal oxide particle included in a measurement area may be derived, and an average of the resistance values may be calculated as the average spreading resistance value.

The tip of the AFM may have a bending radius from 30 nm to 100 nm, and a conductive diamond coating tip may be used as the tip.

In the resistivity range above, a cross-sectional resistance of the cathode active material may be reduced, and conductivity of lithium ions and electrons may both be improved. Accordingly, the power properties of the cathode including

the cathode active material above may be improved.

In example embodiments, a method of preparing the cathode active material is provided.

In example embodiments, lithium-nickel metal oxide particles may be prepared.

For example, the lithium-nickel metal oxide particle may be prepared by reacting a transition metal precursor with a lithium source. The transition metal precursor (e.g., a Ni-Co-Mn precursor) may be prepared through a coprecipitation reaction.

For example, the transition metal precursor may be prepared through the coprecipitation reaction of metal sources. In some embodiments, the metal sources may include a nickel source, a manganese source and a cobalt source.

Examples of the nickel source may include nickel sulfate, nickel hydroxide, nickel nitrate, nickel acetate, a hydrate thereof, etc. Examples of the manganese source may include manganese sulfate, manganese acetate, a hydrate thereof, etc. Examples of the cobalt source may include cobalt sulfate, cobalt nitrate, cobalt carbonate, a hydrates thereof, etc.

An aqueous solution may be prepared by mixing the metal sources together with a precipitating agent and/or a chelating agent in a ratio satisfying the content or concentration ratio of each metal described with reference to Chemical Formula 1. The transition metal precursor may be prepared by coprecipitating the aqueous solution in a reactor.

The precipitating agent may include an alkaline compound such as sodium hydroxide (NaOH), sodium carbonate ($Na_2CO_3$), etc. The chelating agent may include, e.g., ammonia water, ammonium carbonate, etc.

A temperature of the coprecipitation reaction may be controlled in a range from about 40°C to 60°C. A reaction time may be controlled in a range from about 24 hours to 72 hours.

The lithium source may include, e.g., a lithium-containing carbonate (e.g., lithium carbonate), a hydrate (e.g., lithium hydroxide I hydrate (LiOH·H2O), a hydroxide (e.g., lithium hydroxide), a nitrate (e.g., lithium nitrate ($LiNO_3$)), a chloride (e.g., lithium chloride (LiCl), etc.). These may be used alone or in a combination of two or more therefrom.

In example embodiments, a mixture including the transition metal precursor and the lithium source may be prepare, and then a first firing may be performed to obtain the lithium-nickel metal oxide particles. The mixture may further include a raw material including a doping metal element or an auxiliary metal element.

In example embodiments, the first firing may be performed at a temperature ranging from 600°C to 1000°C, or from 700°C to 900°C for 5 to 30 hours, or 10 to 20 hours.

As described above, the lithium-nickel metal oxide particle may be formed in the form of the secondary particle having a structure in which a plurality of the primary particles are aggregated therein.

The secondary particles may be mixed with ammonium paratungstate (APT) to be dry-coated. For example, the dry coating may be formed by dry-mixing the secondary particles and ammonium paratungstate in a dry high speed mixer.

Ammonium paratungstate may be mixed so that a content of the tungsten element may be in a range from 500 ppm to 10,000 ppm or from 1,000 ppm to 5,000 ppm with respect to a total weight of the secondary particles.

A mixture may be prepared by mixing the APT dry-coated secondary particles with an aqueous solution containing a sulfonyl-based additive. The sulfonyl-based additive may be represented by Structural Formula 1.

[Structural Formula 1]

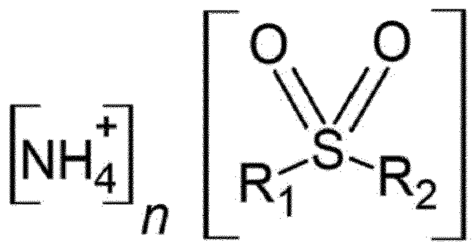

In Structural Formula 1, $0 \leq n < 3$, $R_1$ and $R_2$ may represent $O^-$, $NH_2$, $NH^{3+}$, OH, or a C1 to C3 hydrocarbon group capable of being substituted with a substituent, and the substituent may include halogen, a cyano group, a hydroxyl group, a phosphoric acid group, a carboxyl group, or a salt thereof.

In example embodiments, the aqueous solution may include a solvent and the sulfonyl-based additive, and the solvent may include deionized water.

In the process of preparing the APT dry-coated secondary particles, an excess amount of a lithium source may be used to improve a yield of the cathode active material or to stabilize the synthesis process. In this case, the lithium source including lithium hydroxide (LiOH) and lithium carbonate ($Li_2CO_3$) may remain on the surface of the secondary particles.

When removing the residual lithium by washing with water in an amount substantially equal to or greater than an amount as the cathode active material, the residual lithium may be removed, but oxidation of the surface of the secondary particles and side reactions with water may occur, thereby causing damage or collapse of the layered structure of the

primary particles. Further, as the layered structure is transformed into a face centered cubic structure, a spinel structure and/or a rock salt structure rather than a hexagonal dense structure by water, the lithium-nickel-based oxide may be hydrolyzed to produce nickel impurities such as NiO. The transformed structure may be an irreversible structure, thereby hindering a lithium mobility during charging and discharging. Accordingly, an initial capacity and a capacity retention of the secondary battery may be lowered.

However, according to the above-described embodiments, the aqueous solution may be mixed with the APT dry-coated secondary particles, so that the sulfonyl-based additive may react with the residual lithium present on the surface of the secondary particles to form lithium sulfate. Lithium sulfate may form a passivation on the surface of the secondary particles, and a lithium-sulfur-containing portion having, e.g., a monoclinic crystal structure in which lithium and sulfur are combined may be formed between the primary particles including the hexagonal dense structure.

Additionally, the water-washing treatment may not be performed, so that the lithium-transition metal oxide particle may not contain primary particles having, e.g., a face-centered cubic structure. Thus, the residual lithium may be effectively removed while preventing oxidation and damages to the layered structure by water on the particle surface.

An ammonium ion contained in the sulfonyl-based compound may only include a non-metal element and may be vaporized and removed during a second firing to be described below.

In example embodiments, an amount of the solvent in the aqueous solution may be in a range from 2 wt% to 20 wt% based on the total weight of the secondary particles. In this case, the lithium-sulfur containing portion may be formed to have an appropriate lithium/sulfur content at a position where the residual lithium was present on the surface portion of the secondary particle. Additionally, damage or collapse of the layered structure of the primary particles caused by the water washing-treatment may be prevented.

In example embodiments, an amount of the sulfonyl-based additive added to the solvent may be in a range from 0.5 parts by weight to 2.5 parts by weight based on 100 parts by weight of the cathode active material. In this case, an appropriate amount of the sulfonyl-based additive capable of reacting with the residual lithium may be added to uniformly form the lithium-sulfur-containing portion on the surface of the cathode active material. Additionally, an excessive increase in a sulfur content in the cathode active material may be prevented. Accordingly, the power properties may be maintained while improving the life-span properties of the battery.

The mixture including the APT dry-coated secondary particles and the aqueous solution may be dried and a second firing may be performed to obtain the cathode active material.

The solvent, e.g., deionized water, contained in the aqueous solution may be removed by the drying before the second firing. The drying may be performed in a vacuum state, and may be performed at a temperature ranging from 100°C to 200°C for about 8 hours to 20 hours to remove other volatile impurities other than the solvent.

The dried mixture may be put into a firing furnace to perform the second firing. In the second firing process, ammonium paratungstate coated on the surface of the secondary particles may be melted at a high temperature greater than a melting point and may flow into the secondary particle to penetrate the interface between the primary particles.

The second firing may be performed at a temperature ranging from 200 °C to 500 °C in an oxygen atmosphere. In this case, ammonium paratungstate on the surface of the secondary particle may be sufficiently melted to penetrate into the interface between the primary particle at the inside of the secondary particle to form the lithium-tungsten compound.

FIGS. 1 and 2 are a schematic plan view and a schematic cross-sectional view, respectively, of a lithium secondary battery in accordance with example embodiments. For example, FIG. 2 is a cross-sectional view taken along a line I-I' of FIG. 1 in a thickness direction. FIGS. 1 and 2 provide an example of a lithium secondary battery for convenience of descriptions, and the lithium secondary battery of the present disclosure is not limited to the structure shown in FIGS. 1 and 2.

Referring to FIGS. 1 and 2, the lithium secondary battery may include a cathode 100 including the above-described cathode active material and an anode 130 facing the cathode 100.

The cathode 100 may include a cathode active material layer 110 formed by coating a slurry including the cathode active material on a cathode current collector 105.

For example, a cathode slurry may be prepared by mixing and stirring the cathode active material with a binder, a conductive material and/or a dispersant in a solvent. The cathode slurry may be coated on at least one surface of the cathode current collector 105, and then dried and pressed to form the cathode 100.

The cathode current collector 105 may include stainless steel, nickel, aluminum, titanium, or an alloy thereof. The cathode current collector 105 may include aluminum or stainless steel surface-treated with carbon, nickel, titanium or silver.

The binder may include, e.g., an organic binder such as a vinylidenefluoride-hexafluoropropylene copolymer (PVDF-co-HFP), polyvinylidenefluoride (PVDF), polyacrylonitrile, polymethylmethacrylate or an aqueous binder such as styrene-butadiene rubber (SBR), and may be used together with a thickener such as carboxymethyl cellulose (CMC).

For example, a PVDF-based binder may be used as the binder for forming the cathode. In this case, an amount of the binder for forming the cathode active material layer 110 may be reduced and an amount of the cathode active material may be relatively increased. Accordingly, the power and capacity of the secondary battery may be enhanced.

The conductive material may be included to promote electron transfer between active material particles. For example, the conductive material may include a carbon-based conductive material such as graphite, carbon black, graphene, a carbon nanotube and/or a metal-based conductive material including tin, tin oxide, titanium oxide, a perovskite material such as $LaSrCoO_3$ and $LaSrMnO_3$, etc.

The anode 130 may include an anode current collector 125 and an anode active material layer 120 formed by coating at least one surface of the anode current collector 125.

The anode active material may include a material widely known in the related art which is capable of intercalating and de-intercalating lithium ions without a particular limitation. For example, a carbon-based material such as a crystalline carbon, an amorphous carbon, a carbon composite, a carbon fiber, etc.; a lithium alloy; silicon or tin may be used.

Examples of the amorphous carbon include hard carbon, coke, a mesocarbon microbead (MCMB) fired at 1500°C or less, a mesophase pitch-based carbon fiber (MPCF), etc. Examples of the crystalline carbon may include a graphite-based carbon such as natural graphite, a graphitized coke, a graphitized MCMB, a graphitized MPCF, etc. Examples of an element that may be included in the lithium alloy include aluminum, zinc, bismuth, cadmium, antimony, silicon, lead, tin, gallium, indium, etc.

The anode current collector 125 may include, e.g., gold, stainless steel, nickel, aluminum, titanium, copper or an alloy thereof, and may include, e.g., copper or a copper alloy.

In some embodiments, a slurry may be prepared by mixing and stirring the anode active material with a binder, a conductive material and/or a dispersant in a solvent. The slurry may be coated on the anode current collector, and then dried and pressed to form the anode 130.

Materials substantially the same as or similar to the above-described materials may be used as the binder and the conductive material. In some embodiments, the binder for forming the anode may include, e.g., an aqueous binder such as styrene-butadiene rubber (SBR) for compatibility with the carbon-based active material, and may be used together with a thickener such as carboxymethyl cellulose (CMC).

In some embodiments, a separator 140 may be interposed between the cathode 100 and the anode 130. The separator 140 may include a porous polymer film formed of a polyolefin-based polymer such as an ethylene homopolymer, a propylene homopolymer, an ethylene/butene copolymer, an ethylene/hexene copolymer, an ethylene/methacrylate copolymer, etc. The separator 140 may include a nonwoven fabric formed of a glass fiber having a high melting point, a polyethylene terephthalate fiber, etc.

According to embodiments, an electrode cell may be defined by the cathode 100, the anode 130 and the separator 140, and a plurality of the electrode cells may be stacked to form an electrode assembly 150 in, e.g., a jelly roll shape. For example, the electrode assembly 150 may be formed by winding, stacking, folding, etc., of the separator 140.

The electrode assembly 150 may be accommodated within a case 160 together with an electrolyte to define a lithium secondary battery. In example embodiments, a non-aqueous electrolyte may be used as the electrolyte.

The non-aqueous electrolyte may include a lithium salt and an organic solvent. The lithium salt may be represented by $Li^+X^-$ , and an anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination of two or more therefrom.

As illustrated in FIG. 1, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

The lithium secondary battery may be manufactured in, e.g., a cylindrical shape using a can, a prismatic shape, a pouch shape or a coin shape.

Hereinafter, specific experimental examples are proposed to more concretely describe the disclosed embodiments. However, the following examples are only given for illustrating the present disclosure and those skilled in the related art will obviously understand that various alterations and modifications are possible within the scope and spirit of the present invention. Such alterations and modifications are duly included in the appended claims.

Example 1

Preparation of cathode active material

$NiSO_4$, $CoSO_4$ and $MnSO_4$ were mixed in a molar ratio of 0.885:0.090:0.025, respectively, using distilled water

from which dissolved oxygen was removed by bubbling with $N_2$ for 24 hours. The solution was added to a reactor at 50°C, and a co-precipitation reaction was performed for 48 hours using NaOH and $NH_3$•$H_2O$ as a precipitating agent and a chelating agent, respectively, to obtain $Ni_{0.885}Co_{0.09}Mn_{0.025}(OH)_2$ as a transition metal precursor. The obtained precursor was dried at 80°C for 12 hours and then redried at 110°C for 12 hours.

Lithium hydroxide and the transition metal precursor were added to a dry-high speed mixer in a molar ratio of 1.01: 1, and then uniformly mixed for 5 minutes.

The mixture was put in a firing furnace, and a temperature was raised to 730 to 750°C at a ramping rate of 2°C/min and maintained at 730 °C to 750 °C for 10 hours. Oxygen was continuously passed at a flow rate of 20 L/min during the heating and temperature maintenance. Thereafter, natural cooling was performed to room temperature, pulverized, and classified to obtain lithium-nickel oxide particles.

Ammonium paratungstate (APT) was added to have a tungsten content of 1,000 ppm based on a total weight of the lithium-nickel metal oxide particles, aluminum oxide was added to have an aluminum content of 1,000 ppm, and mixed in a high-speed mixer for 5 minutes to perform a dry-coating of the lithium-nickel metal oxide particles.

1.2 wt% of an ammonium sulfate ($(NH_4)_2SO_4$) powder based on the total weight of the lithium-transition metal oxide particles was added to 5 wt% of pure water (deionized Water, DIW) based on the total weight of the dry-coated lithium-nickel metal oxide particles, and then stirred to sufficiently dissolve ammonium sulfate in pure water and prepare a sulfonyl-based compound aqueous solution.

The dry-coated lithium-nickel metal oxide particles and the sulfonyl-based compound aqueous solution were mixed to prepare a mixture. The mixture was dried in a vacuum oven at a temperature of 100°C to 200°C for about 10 hours to remove a moisture containing a solvent. After drying, the temperature was raised to 400°C at a ramping rate of 2°C/min while supplying oxygen at a flow rate of 20 L/min in a firing furnace, and a temperature was maintained at the increased temperature for 10 hours. After the firing, cathode active material particles having D50 of 16 μm or less were obtained by sieving with a 325 mesh.

Fabrication of half coin cell

A half coin cell was manufactured using the above-described cathode active material. Specifically, the cathode active material, graphite as a conductive material and PVDF as a binder were mixed in a mass ratio of 93:5:2, respectively, to prepare a cathode mixture. The cathode mixture was coated on an aluminum current collector and dried. Thereafter, a cathode was manufactured by pressing so that an electrode density became 3.0 g/cc.

A lithium metal was used as an anode.

The cathode and the anode prepared as described above were notched in a circular shape having diameters corresponding to Φ 14 and Φ 16 diameters, respectively, and stacked to form an electrode cell by interposing a separator (polyethylene, thickness 13 μm) notched with a size of Φ 19 between the cathode and the anode. The electrode cell was placed in a coin cell exterior material with a diameter of 20 mm and a height of 1.6 mm, an electrolyte was injected and assembled, and aging was performed for 12 h or more so that the electrolyte impregnated into the electrodes.

A mixed solvent of EC/EMC (30/70; volume ratio) with 1M $LiPF_6$ was used as the electrolyte

Formation charge and discharge were performed for the half coin cell fabricated as described above (charging condition CC-CV 0.1C 4.3V 0.005C CUT-OFF, discharging condition CC 0.1C 3V CUT-OFF).

Example 2

A cathode active material and a half coin cell were manufactured by the same method as that in Example 1, except that ammonium paratungstate (APT) was added to have a tungsten content of 3,000 ppm based on the total weight of the lithium-nickel metal oxide particles.

Example 3

A cathode active material and a half coin cell were manufactured by the same method as that in Example 1, except that ammonium paratungstate (APT) was added to have a tungsten content of 10,000 ppm based on the total weight of the lithium-nickel metal oxide particles.

Comparative Example 1

A cathode active material and a half coin cell were manufactured by the same method as that in Example 1, except that tungsten oxide ($WO_3$) was added to have a tungsten content of 10,000 ppm based on the total weight of the

lithium-nickel metal oxide particles.

Comparative Example 2

A cathode active material and a half coin cell were manufactured by the same method as that in Comparative Example 1, except that the mixture was dried and fired at a temperature of 500°C.

Comparative Example 3

A cathode active material and a half coin cell were manufactured by the same method as that in Comparative Example 1, except that the mixture was dried and fired at a temperature of 600°C.

Comparative Example 4

A cathode active material and a half coin cell were manufactured by the same method as that in Comparative Example 1, except that the mixture was dried and fired at a temperature of 700°C.

Reference Example

A cathode active material and a half coin cell were manufactured by the same method as that in Example 1, except that lithium-nickel oxide particles were solely placed in a firing furnace, oxygen was supplied at a flow rate of 20 L/min, ramped to 400°C at a ramping rate of 2°C/min, and maintained at the increased temperature for 10 hours in the firing.

Experimental Example 1: TEM-EDS Analysis

Transmission electron microscope (TEM) images of the cathode active material prepared in Examples and Comparative Examples was obtained, and element mapping images and EDS spectra were obtained by an energy-dispersive X-ray Spectrometer (EDS).

In the EDS element mapping image, energy regions of a tungsten element and a nickel element overlapped (see EDS spectra in FIGS. 8 to 12). Thus, the energy region of tungsten was partially modified and a background intensity effect was reduced to obtain a tungsten distribution.

In FIGS. 3 to 7, TEM images and EDS tungsten element mapping images of the cathode active materials of Example 3 and Comparative Examples 1 to 4 are shown. Specifically, each of rectangular display portions 1, 2 and 3 of an upper left TEM image of FIG. 3 are, and the EDS tungsten element mapping image is shown as an inserted image of each TEM image. Each rectangular designated portion of a left TEM image of FIGS. 4 to 7 is enlarged and shown at a right image, and the EDS tungsten element mapping image is shown as an inserted image.

FIGS. 8 to 10 show EDS spectra at a surface and two inner points of the cathode active materials of Example 3. FIGS. 11 and 12 show EDS spectra at a surface and an inner point of the cathode active material of Comparative Example 1. Specifically, in left TEM images of FIGS. 8 to 12, an EDS spectrum of a rectangular designated portion is shown at a lower image. Additionally, a tungsten content at the corresponding point analyzed in FIGS. 8 to 12 is shown in Table 1 below.

[Table 1]

| | | particle | tungsten content (wt%) |
|---|---|---|---|
| Example 3 | FIG. 8 | surface | 22.5 |
| | FIG. 9 | inner portion | 26.49 |
| | FIG. 10 | inner portion | 5.72 |
| Comparative Example 1 | FIG. 11 | surface | 18.75 |
| | FIG. 12 | inner portion (1 μm) | 0.93 |

Referring to FIG. 3, the cathode active material of Example 3 had a secondary particle structure in which a plurality of primary particles were aggregated, and tungsten was present at an interface between the primary particles designated by rectangles 1 and 2 including the surface portions of the secondary particle. Further, the cathode active material of Examples 3 also had tungsten at the inner point of about 4.07 μm (depth corresponding to about 50.9% of a radius) from the surface of the secondary particle.

Referring to FIGS. 4 to 7, in the cathode active materials of Comparative Examples, tungsten was distributed only at the particle surface, and was not present at the inner point over a depth of about 500 nm or more from the particle surface. Additionally, in the cathode active materials of Comparative Examples, tungsten did not penetrate to an inside of the particle even though the firing temperature was increased during the manufacturing process.

Referring to FIGS. 8 to 10, tungsten was present at the surface portion and the inner portion of the cathode active material of Example 3.

Referring to FIGS. 11, 12, and Table 1, the cathode active material of Comparative Example 1 had a tungsten content of about 0.93 wt% at the inner point of the particle having a depth of 1 μm from the surface of the particle. Referring to the right EDS spectrum of FIG. 12, a nickel peak of high intensity at a horizontal axis of about 7.5 keV existed, and a tungsten peak in a vicinity thereof was present.

However, because the energy region of the tungsten element and the nickel element overlapped, the tungsten content of 0.93 wt% can be qualitatively interpreted as a result of an interference between the nickel peak and the tungsten peak. When considering that a resolution limit was 0.5 wt%, the tungsten content was a value within an error range and is interpreted that nearly no tungsten element was present.

That is, it is confirmed that the cathode active material of Examples included a penetration region distributed from the surface to the inside of the secondary particle and including a tungsten compound at the interface between the primary particles. Further, it is confirmed that, in the cathode active material of Comparative Examples, tungsten was present only in the surface portion of the secondary particle, e.g., within a depth of about 10 nm from the surface, and tungsten was not present at that inside of the particle.

Experimental Example 2: TEM-SAED Analysis

A TEM-SAED (selective area electron diffraction) analysis was performed to analyze a crystal phase of the primary particles of the cathode active materials of Example 3 and Comparative Example 1. After the cathode active material particles of Example 3 and Comparative Example 1 were FIB-processed to prepare a specimen, a cross-section of the specimen was designated by a selected area aperture using a TEM, and a diffraction mode was entered to obtain a diffraction image. SAED pattern images were confirmed by fitting a layered structure by Zone Axis [010], and a rock-salt structure by [110].

FIGS. 13 and 14 show TEM images and SAED images (inserted image) of Example 3 and Comparative Example 1, respectively.

Referring to FIG. 13, the cathode active material of Example 3 included the layered structure and the rock-salt phase in the primary particles, and the rock-salt phase was formed in a region having a thickness of about 8.93 nm.

Referring to FIG. 14, the cathode active material of Comparative Example 1 also included the layered structure and the rock salt phase in the primary particles, and the rock salt phase was formed in a region having a thickness of about 10.8 nm.

Experimental Example 3: XPS Surface Analysis

Components from the surface of the cathode active material particles of Example 3 and Comparative Examples to a depth of 10 nm were analyzed by an X-ray photoelectron spectroscopy (XPS). XPS analysis conditions are as follows.

- Equipment: ESCALAB 250Xi (Thermo Fisher Scientific)

1) X-ray type: Source - Al k alpha, 1486.68eV, 900um Beam size
2) Scan conditions (including Al2p and Na1s):

Number of scans: 20 to 50
Pass energy: 20eV
Dwell time: 50 to 100 ms
Energy step: 0.1 eV

An XPS etching was performed to a depth of 10 nm. Content data of tungsten elements were obtained using a regional integral value of W $4f_{7/2}$ peak obtained by repeatedly performing XPS analysis 10 times for different surface points of each cathode active material particle. A standard deviation of data was divided by an average value to derive a relative standard deviation (RSD). The results are shown in Table 2 below.

[Table 2]

| | Example 3 | Comparative Example 1 | Comparative Example 2 | Comparative Example 3 | Comparative Example 4 |
|---|---|---|---|---|---|
| RSD (%) | 23.5 | 8.7 | 5.9 | 9.9 | 5.4 |

Referring to Table 2, the cathode active material of Example 3 had a high RSD value of 23.5%. The cathode active materials of Comparative Examples 1 to 4 had an RSD value of less than 10%.

In the process of manufacturing the cathode active material of Example 3, a portion of tungsten located on the outer surface of the particle penetrated into the inside of the particle. However, as tungsten penetrated into the interface between the primary particles, the tungsten penetrated into the inside of the secondary particle to different depths according to points of the outer surface of the secondary particle. Accordingly, a distribution of tungsten was uneven at the surface portion of the cathode active material particle of Example 3.

In cathode active materials of Comparative Examples, tungsten did not penetrate into the cathode active material particles, and tungsten remained on the surface in the cathode active material by the dry coating during the manufacturing process was entirely present on the surface of the particles.

Accordingly, distribution amounts of tungsten were detected at a similar level at any position on the surface of the cathode active material particles, and the low RSD values of 10% or less were provided.

Experimental Example 4: Measurement and Evaluation of Resistivity

To measure a resistivity, the cathode active materials prepared in Example, Comparative Example and Reference Example were mixed with a binder (PVDF) and coated on an Al foil to manufacture an electrode.

To exclude the effect of increasing a conductivity by a conductive material and analyze an inherent conductivity of the cathode active material, only the binder was mixed in a minimum content (1 wt%) to manufacture the electrode.

To evaluate an electrical resistance distribution on a cross-section of the electrode, an analysis was performed using an scanning spreading resistance microscope (SSRM) mode using an AFM.

Specifically, the cathodes prepared in Examples, Comparative Examples and Reference Example were cut, a conductive material-coated tip (radius of contact area: 30 nm) was contacted using Bruker's AFM for a 200 nm X 200 nm region of the cross-section, and a voltage of 3V was applied to analyze in the SSRM mode to obtain a spreading resistance distribution image.

FIG. 15 shows SSRM diffusion resistance distribution images of the cathode cross-sections of Examples 1 to 3, Comparative Examples 1 to 4 and Reference Example.

Referring to FIG. 15, in the spreading resistance distribution image, darker color represents lower resistance. A peripheral region at an outer portion of the cathode active material particle had high resistance and thus showed brighter color. Particularly, in Examples 1 to 3, each cross-section showed a clear dark color.

In Comparative Examples, scratch marks appeared horizontally in bright colors on the cross-section of the active material. The scratch represents a portion where a thickness of the processed electrode cross-section was not uniform, and a current was absorbed in the portion, resulting in an increase in resistance. Thus, for accurate comparison, only a portion having a clean surface except for the scratched portion was used to calculate an average resistance value.

From the spreading resistance distribution image, the average of diffusion resistance values for the cross-section of each cathode active material particle with respect to a 200 nm X 200 nm region was calculated, and a resistivity was calculated according to the following Equation 1. The results are shown in Table 3. Additionally, FIG. 16 shows a graph of average spreading resistance values of the cathode active materials of Examples 1 to 3, Comparative Example 1 and Reference Example.

[Equation 1]

$$\rho = 4 \times r \times R_{sp}$$

In Equation 1, $\rho$ is the resistivity, $R_{sp}$ is an average value of spreading resistances of the cathode active materials, and r is a contact radius of the AFM tip.

[Table 3]

| | resistivity (Ω · cm) |
|---|---|
| Example 1 | 8.11 x $10^1$ (81.1) |
| Example 2 | 4.26 x $10^1$ (42.6) |
| Example 3 | 1.02 x $10^2$ (102) |
| Comparative Example 1 | 1.29 x $10^2$ (129) |
| Comparative Example 2 | 1.13 x $10^2$ (113) |
| Comparative Example 3 | 1.28 x $10^2$ (128) |
| Comparative Example 4 | 1.27 x $10^2$ (127) |
| Reference Example | 2.18 x $10^1$ (21.8) |

Referring to Table 3 and FIG. 16, the resistivities of the cathode active materials of Examples were lower than those of the cathode active materials of Comparative Examples.
The cathode of Reference Example without tungsten showed a relatively low resistance. As confirmed in Experimental Example 2, the cathode active material of Examples and Comparative Examples included rock salt phases, and the rock salt phase as a non-conductor is assumed to increase the resistance of the cathode active material.

Experimental Example 5: Evaluation on battery properties

(1) Evaluation on initial capacity efficiency

The half coin cells fabricated according to Examples and Comparative Examples were charged (CC-CV 0.1C 4.3V 0.005C CUTOFF) in a chamber at 25°C, and then a battery capacity (initial charge capacity) was measured, and then a battery capacity (initial discharge capacity) was measured after discharging (CC 0.1C 3.0V CUT-OFF).
An initial capacity efficiency was evaluated by expressing the measured initial discharge capacity as a percentage (%) relative to the measured initial charge capacity.

(2) Evaluation on life-span properties during repeated charging/discharging

Charging (CC/CV 0.5C 4.3V 0.05C CUT-OFF) and discharging (CC 1.0C 3.0V CUT-OFF) were repeated 300 times for the half coin cells according to Examples and Comparative Examples to derive a capacity retention as a percentage of a discharge capacity at the 300th cycle relative to a discharge capacity at the 1st cycle.

[Table 4]

| | initial discharge capacity (mAh/g) | initial charge/discharge efficiency (%) | capacity retention (%) |
|---|---|---|---|
| Example 1 | 210.8 | 89.7% | 88.4% |
| Example 2 | 209.9 | 89.6% | 91.2% |
| Example 3 | 207.8 | 88.8% | 89.5% |
| Comparative Example 1 | 207.6 | 88.7% | 87.6% |
| Comparative Example 2 | 202.2 | 87.9% | 85.3% |
| Comparative Example 3 | 194.7 | 85.4% | 88.6% |
| Comparative Example 4 | 187.9 | 83.9% | 90.8% |
| Reference Example | 208.1 | 88.3% | 87.4% |

Referring to Table 4, the initial discharge capacity slightly decreased as the tungsten content increased in Examples, which was a trade-off phenomenon due to the rock salt formation by the addition of tungsten.
A difference in initial charge/discharge efficiency according to the increase in the tungsten content in Examples 1 to 3 was within 1 percentage point. In Examples, the initial efficiency was improved by 0.5 to 1.4 percentage point

compared to that from Reference Example without tungsten, and improved efficiency was provided compared to that from Comparative Examples.

In Comparative Examples, the temperature of the heat treatment for forming the crystal structure of the cathode active material was not within an optimum range according to a transition metal composition, and an undesirable crystal phase (e.g., rock salt phase such as NiO) was formed, thereby rapidly reducing charge and discharge efficiency and discharge capacity.

Accordingly, in Comparative Examples, even when the capacity retention increased as the heat treatment temperature increased, the low discharge capacity of the battery was maintained, thereby providing degraded battery properties.

In Examples, similar or increased initial charge/discharge efficiencies compared to those from Reference Example and Comparative Examples were provided, and the capacity retention after 300 cycles was about 1 to 3.8 percentage points higher.

When comparing to the results of Example 3 and Comparative Example 1 having the same heat treatment temperature and the same tungsten content, the initial charge/discharge efficiency and the discharge capacity were in similar levels, but the capacity retention of Example was about 2 percentage points higher.

In Examples, it is predicted that the tungsten penetration region was formed up to 55% of the particle radius due to the penetration of APT into the active material, and structural stability of the cathode active material particles was improved.

## Claims

1. A cathode active material for a lithium secondary battery comprising a lithium-nickel metal oxide particle having a form of a secondary particle in which a plurality of primary particles are aggregated therein,

   wherein the lithium-nickel metal oxide particle includes a penetration region formed in an area extending from a surface to a point 70% or less of a radius of the particle in a direction to a center of the particle, the penetration region including a tungsten compound at an interface between the primary particles, and
   a relative standard deviation (RSD) value calculated from results of measuring a tungsten content from the surface of the secondary particle to a depth of 10 nm 10 times at different points using an X-ray Photoelectron Spectroscopy (XPS) is in a range from 10% to 40%.

2. The cathode active material for a lithium secondary battery according to claim 1, wherein the relative standard deviation value is in a range from 20% to 30%.

3. The cathode active material for a lithium secondary battery according to claims 1 or 2, wherein a thickness of the penetration region corresponds to 10% to 55% of the radius of the secondary particle in the direction from the surface to the center of the particle.

4. The cathode active material for a lithium secondary battery according to one of claims 1 to 3, wherein the lithium-nickel metal oxide particle include a chemical structure represented by Chemical Formula 1:

   [Chemical Formula 1] $Li_a[Ni_bCo_cMn_dX_y]O_e$

   wherein, in Chemical Formula 1, X includes at least one of W, S, Al, Ti, Sr, Zr, P and K, $0.5<a<1.5$, $0.8<b\leq 1$, $0<c<0.1$, $0<d<0.1$, $1.5<e<2.5$, and $0<y<0.1$.

5. The cathode active material for a lithium secondary battery according to one of claims 1 to 4, wherein the tungsten compound includes a lithium-tungsten oxide.

6. The cathode active material for a lithium secondary battery according to claim 5, wherein the lithium-tungsten oxide is represented by Chemical Formula 2:

   [Chemical Formula 2] $Li_xW_yO_z$

   wherein, in Chemical Formula 2, $0<x\leq 3$, $0<y\leq 5$, and $0<z\leq 8$.

7. The cathode active material for a lithium secondary battery according to one of claims 1 to 6, wherein a content of

tungsten based on a total weight of the lithium-nickel metal oxide particle is in a range from 500 ppm to 10,000 ppm.

**8.** The cathode active material for a lithium secondary battery according to one of claims 1 to 7, wherein a content of tungsten based on a total weight of the lithium-nickel metal oxide particle is in a range from 1,000 ppm to 5,000 ppm.

**9.** The cathode active material for a lithium secondary battery according to one of claims 1 to 8, wherein at least a portion of the plurality of primary particles in the penetration region includes a rock-salt region, and a thickness of the rock-salt region is in a range from 5 nm to 10 nm in a direction from a surface to a center of the primary particle.

**10.** The cathode active material for a lithium secondary battery according to one of claims 1 to 9, wherein an average particle diameter (D50) of the lithium-nickel metal oxide particle is in a range from 10 μm to 30 μm.

**11.** The cathode active material for a lithium secondary battery according to one of claims 1 to 10, wherein a resistivity defined by Equation 1 is in a range from 30 Ω·cm to 120 Ω·cm:

[Equation 1]

$$\rho = 4 \times r \times R_{sp}$$

wherein, in Equation 1, $\rho$ is the resistivity, $R_{sp}$ is an average value of spreading resistances of the lithium-nickel metal oxide particle measured from a spreading resistance distribution image obtained in a scanning spreading resistance microscopy (SSRM) mode by contacting a tip coated with a conductive component of an atomic force microscope (AFM) to a region of 200 nm X 200 nm in a cross-section of a cathode including the cathode active material and applying a voltage of 3V, and r is a contact radius of the tip.

**12.** The cathode active material for a lithium secondary battery according to claim 11, wherein the resistivity is in a range from 40 Ω·cm to 105 Ω·cm.

**13.** A lithium secondary battery, comprising:

a cathode 100 comprising the cathode active material for a lithium secondary battery according to one of claims 1 to 12; and
an anode 130 facing the cathode.

FIG. 1

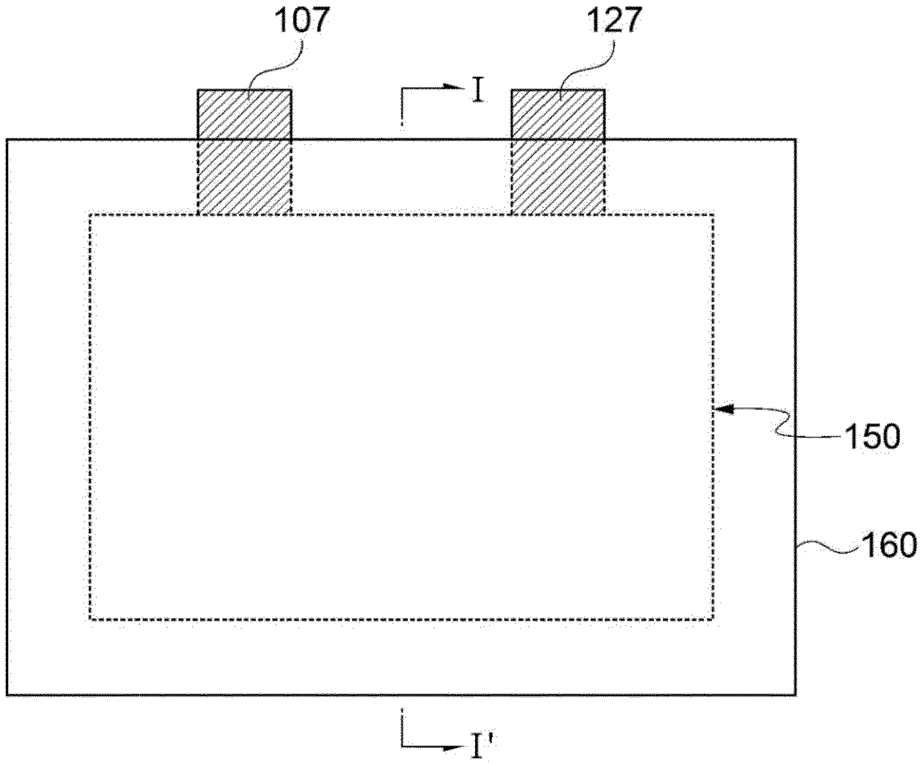


FIG. 2

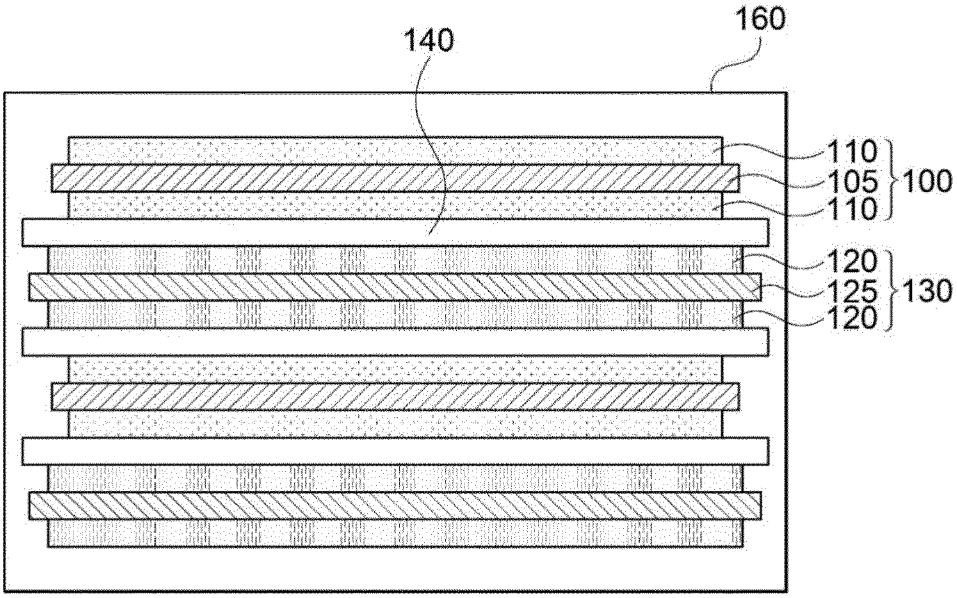

FIG. 3

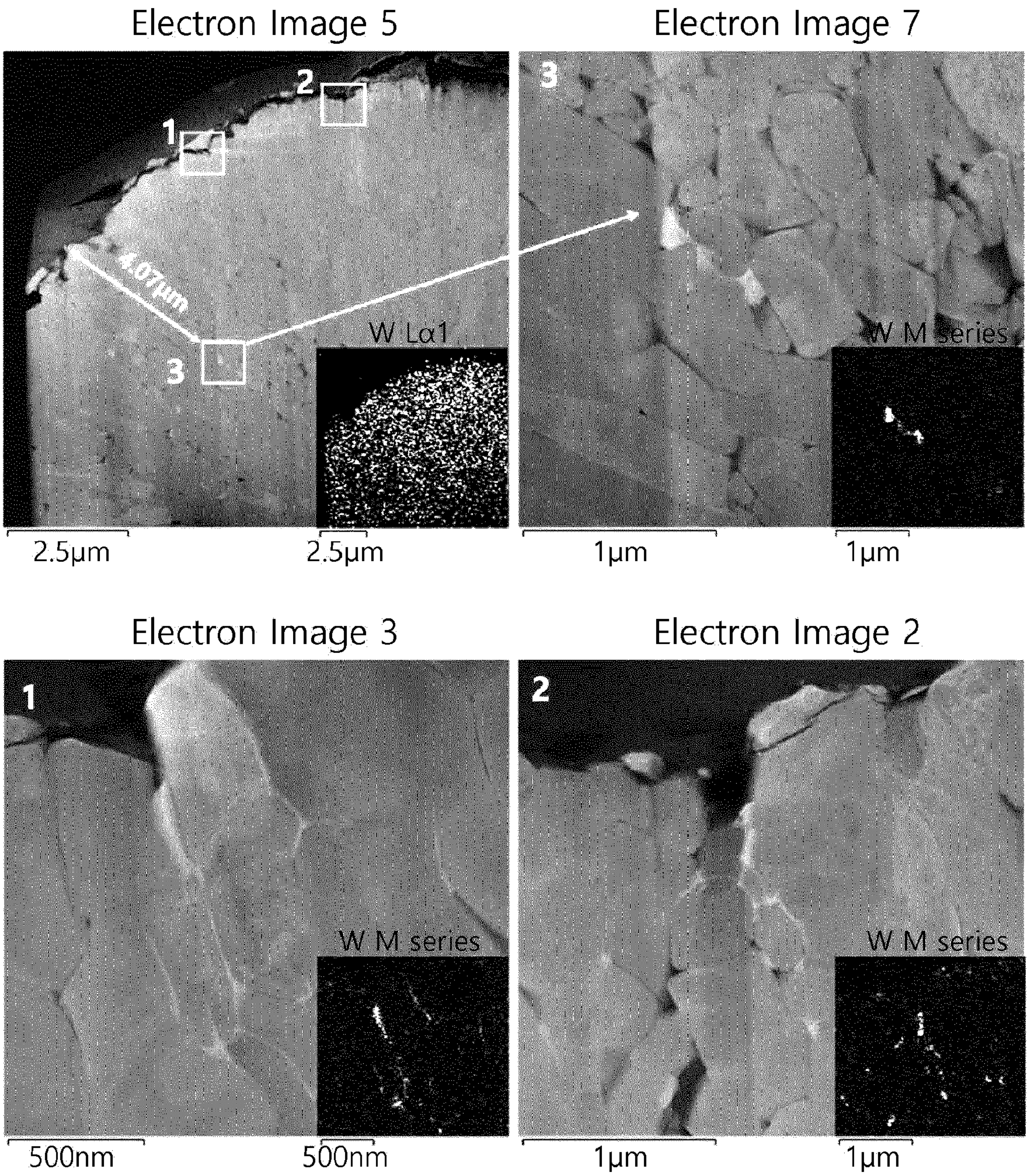
Electron Image 5
2
1
4.07μm
3
W Lα1
2.5μm
2.5μm
Electron Image 7
3
W M series
1μm
1μm
Electron Image 3
1
W M series
500nm
500nm
Electron Image 2
2
W M series
1μm
1μm

FIG. 4

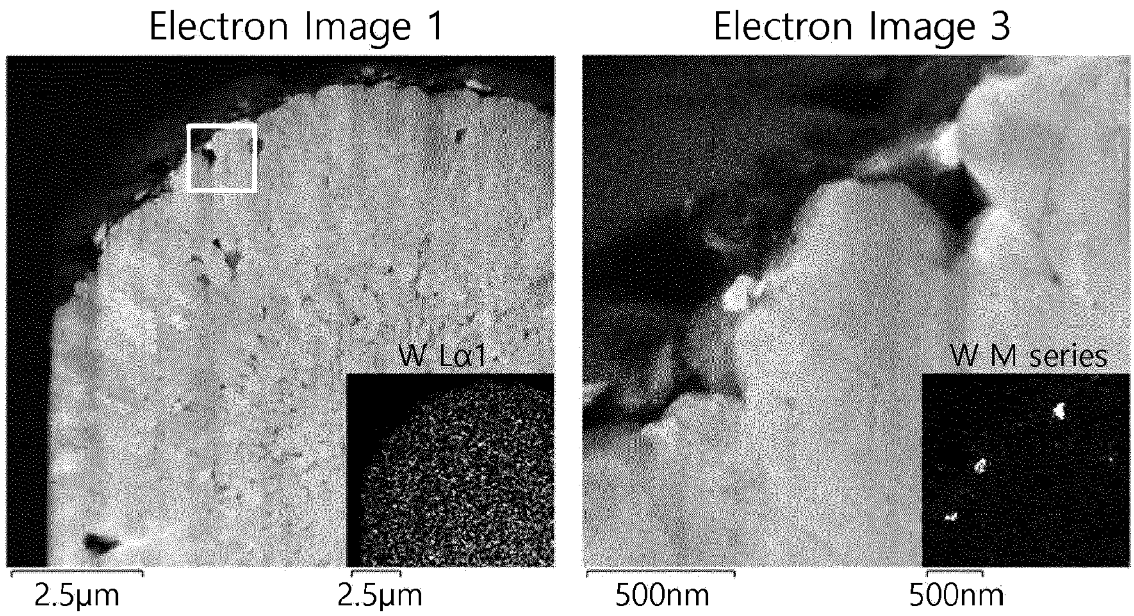
Electron Image 1
Electron Image 3
W Lα1
W M series
2.5μm
2.5μm
500nm
500nm

FIG. 5

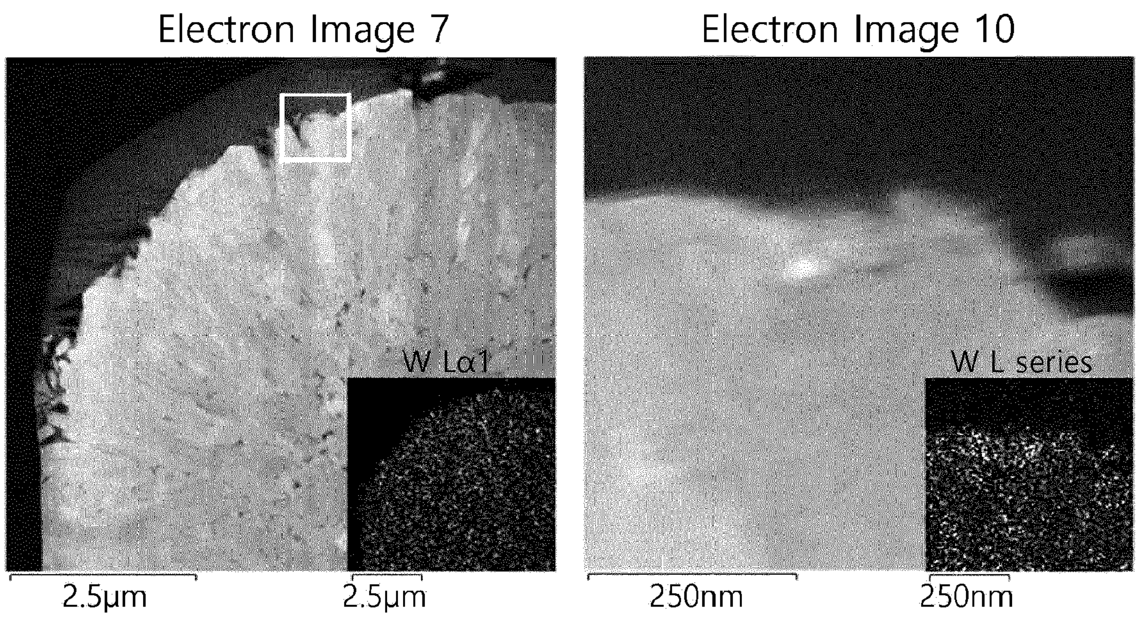
Electron Image 7
Electron Image 10
W Lα1
W L series
2.5μm
2.5μm
250nm
250nm

FIG. 6

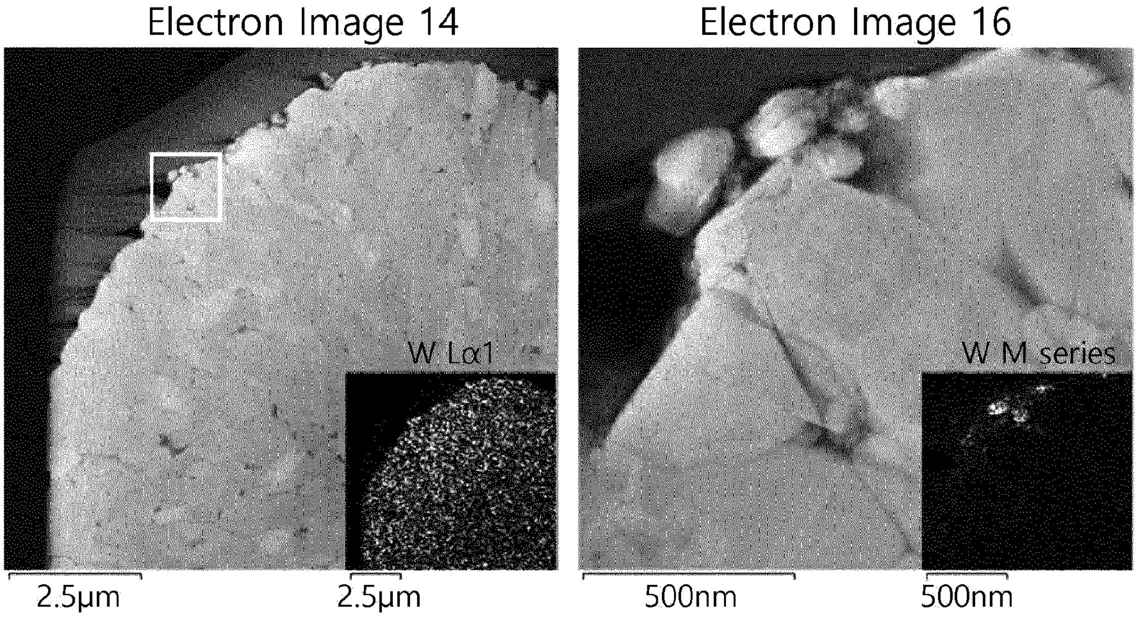
Electron Image 14
Electron Image 16
W Lα1
W M series
2.5μm
2.5μm
500nm
500nm

FIG. 7

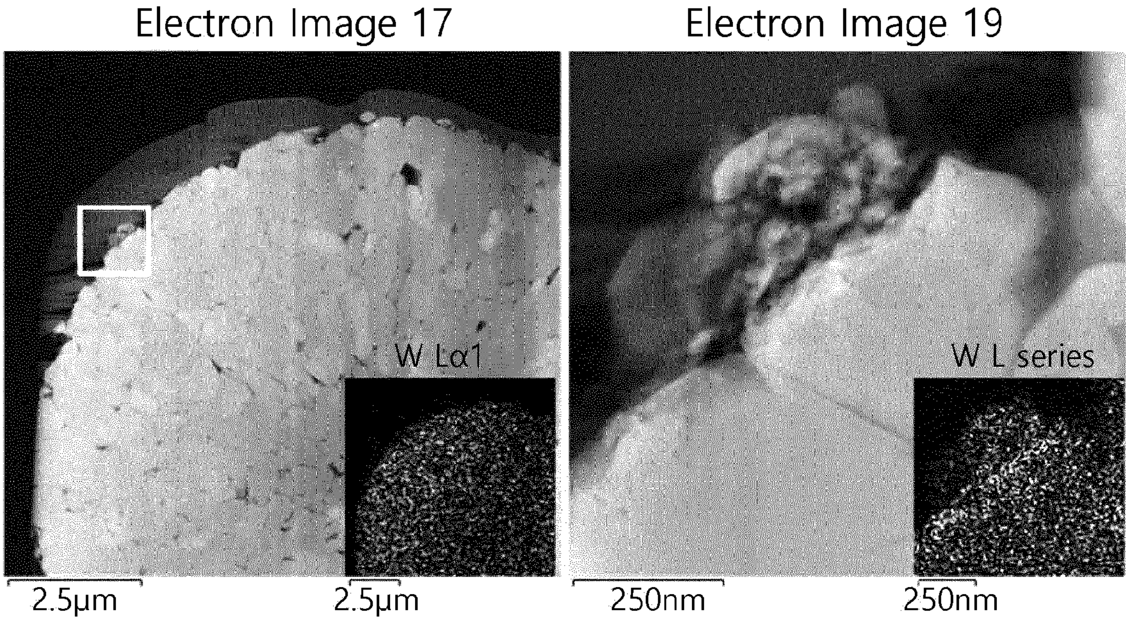
Electron Image 17
Electron Image 19
W Lα1
W L series
2.5μm
2.5μm
250nm
250nm

FIG. 8

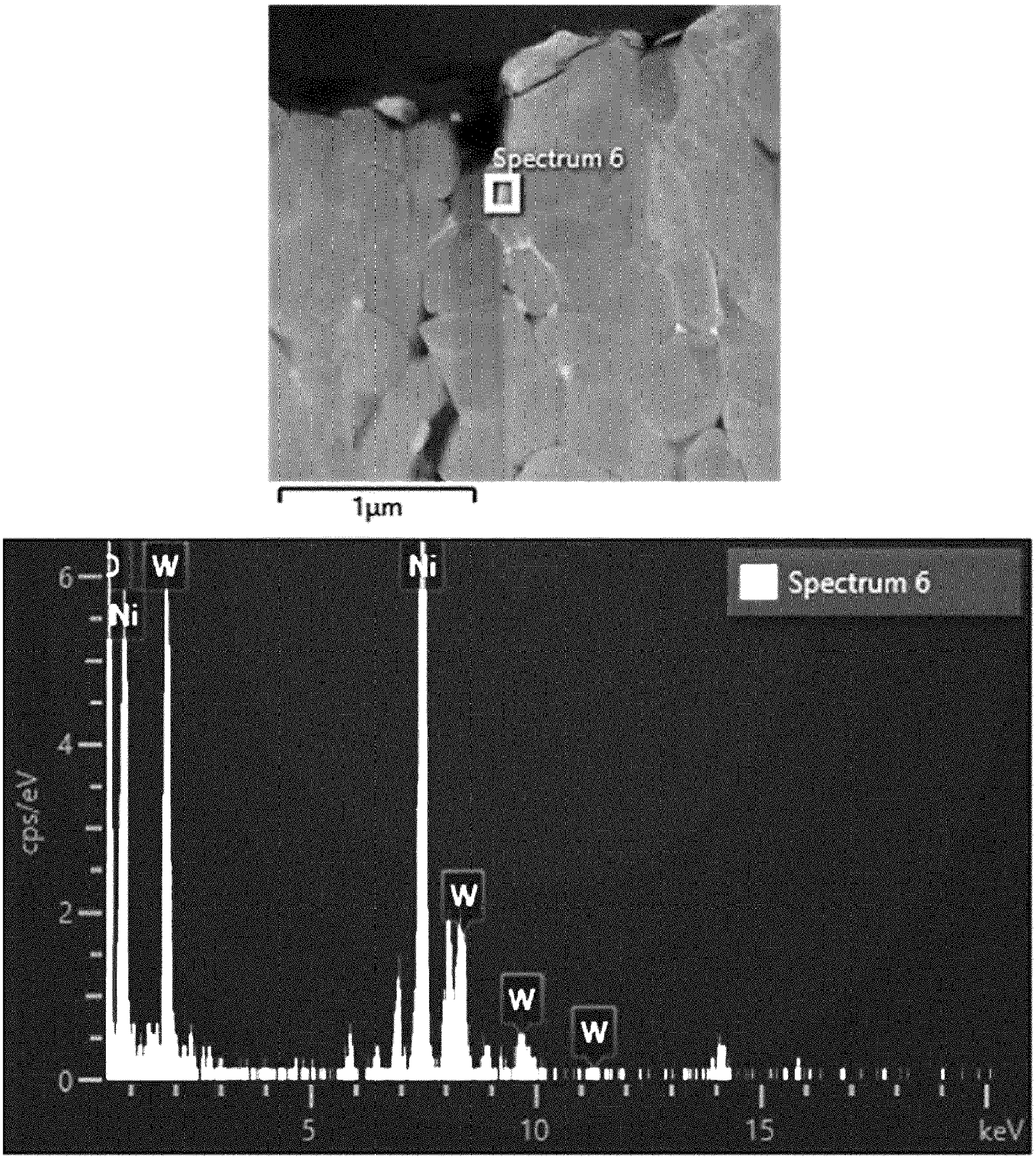

FIG. 9

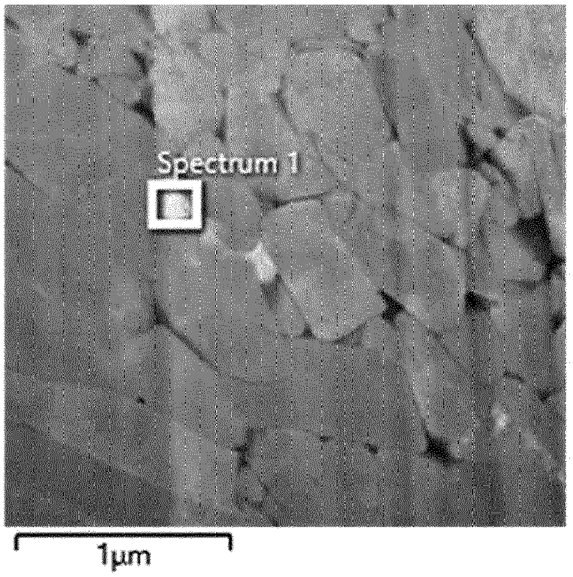


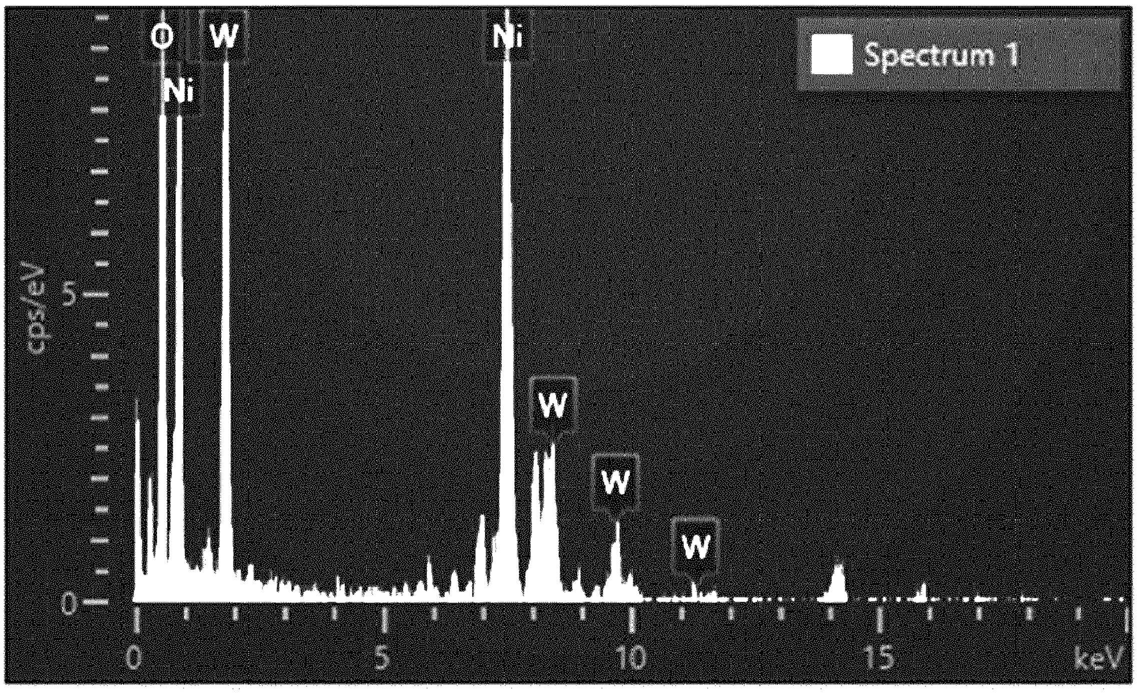

FIG. 10

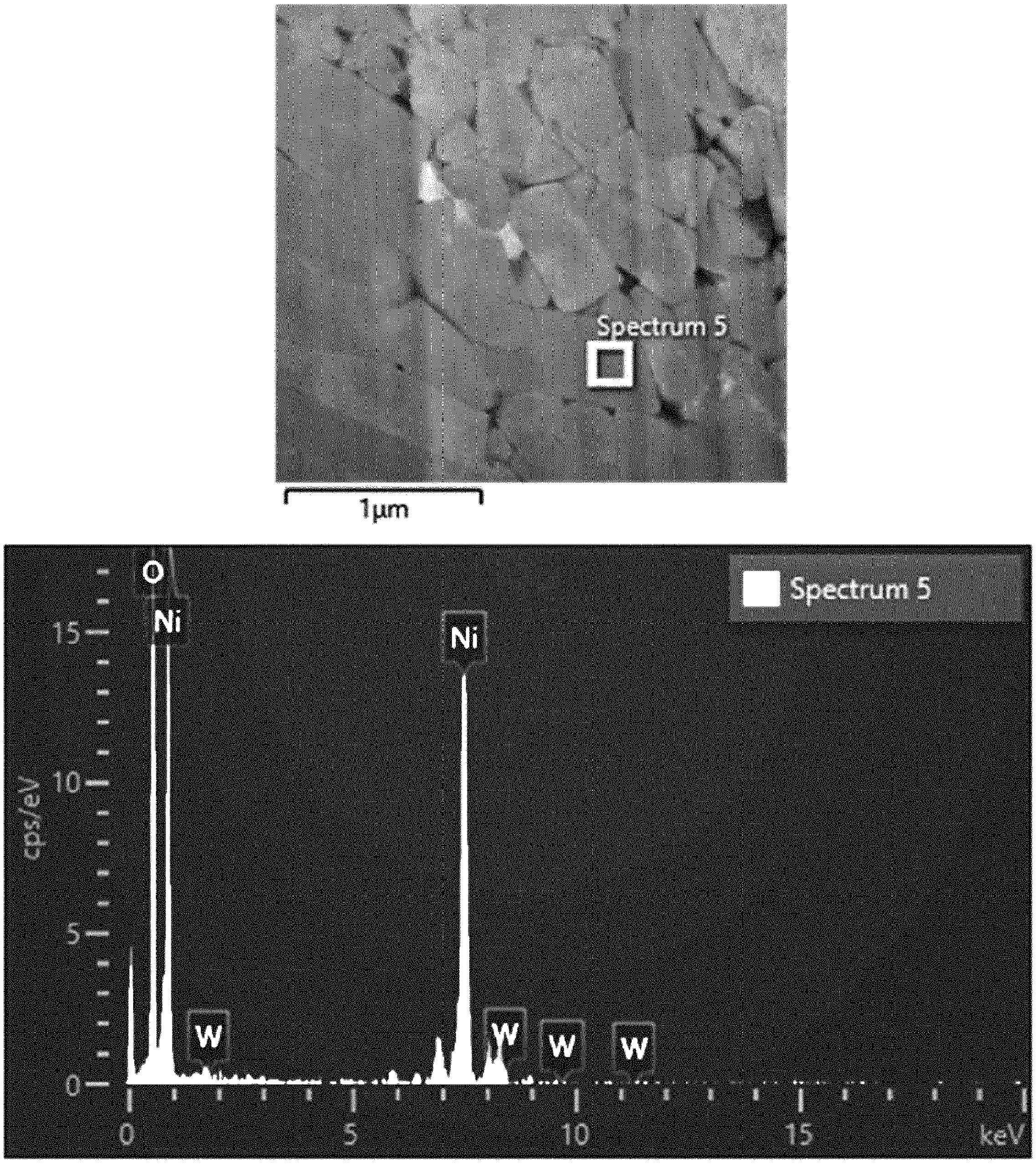
Spectrum 5
1μm
O
Ni
Ni
W
W
W
W
Spectrum 5
cps/eV
0
5
10
15
0
5
10
15
keV

FIG. 11

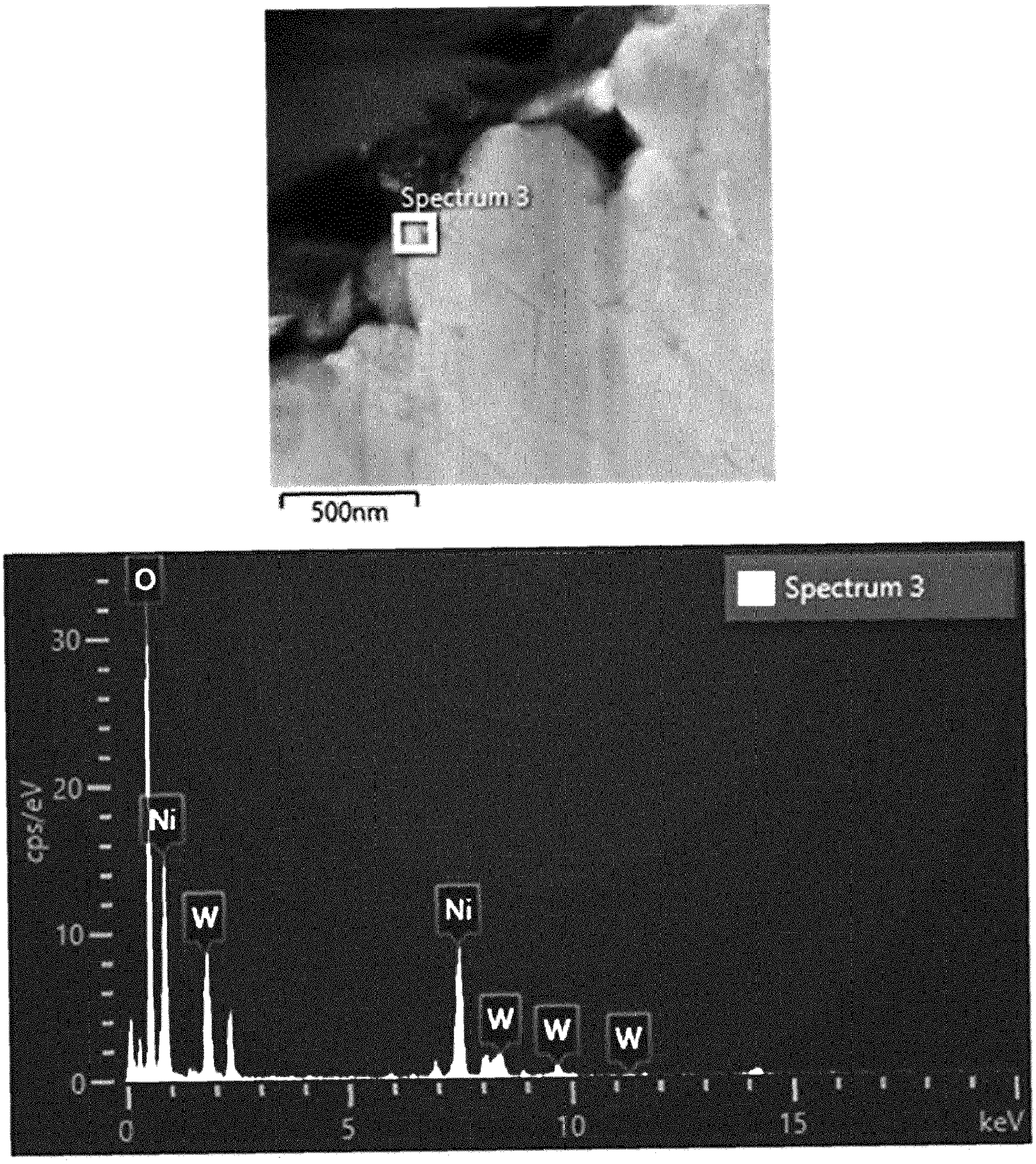
Spectrum 3
500nm
Spectrum 3
O
Ni
W
Ni
W
W
W
cps/eV
30
20
10
0
0
5
10
15
keV

FIG. 12

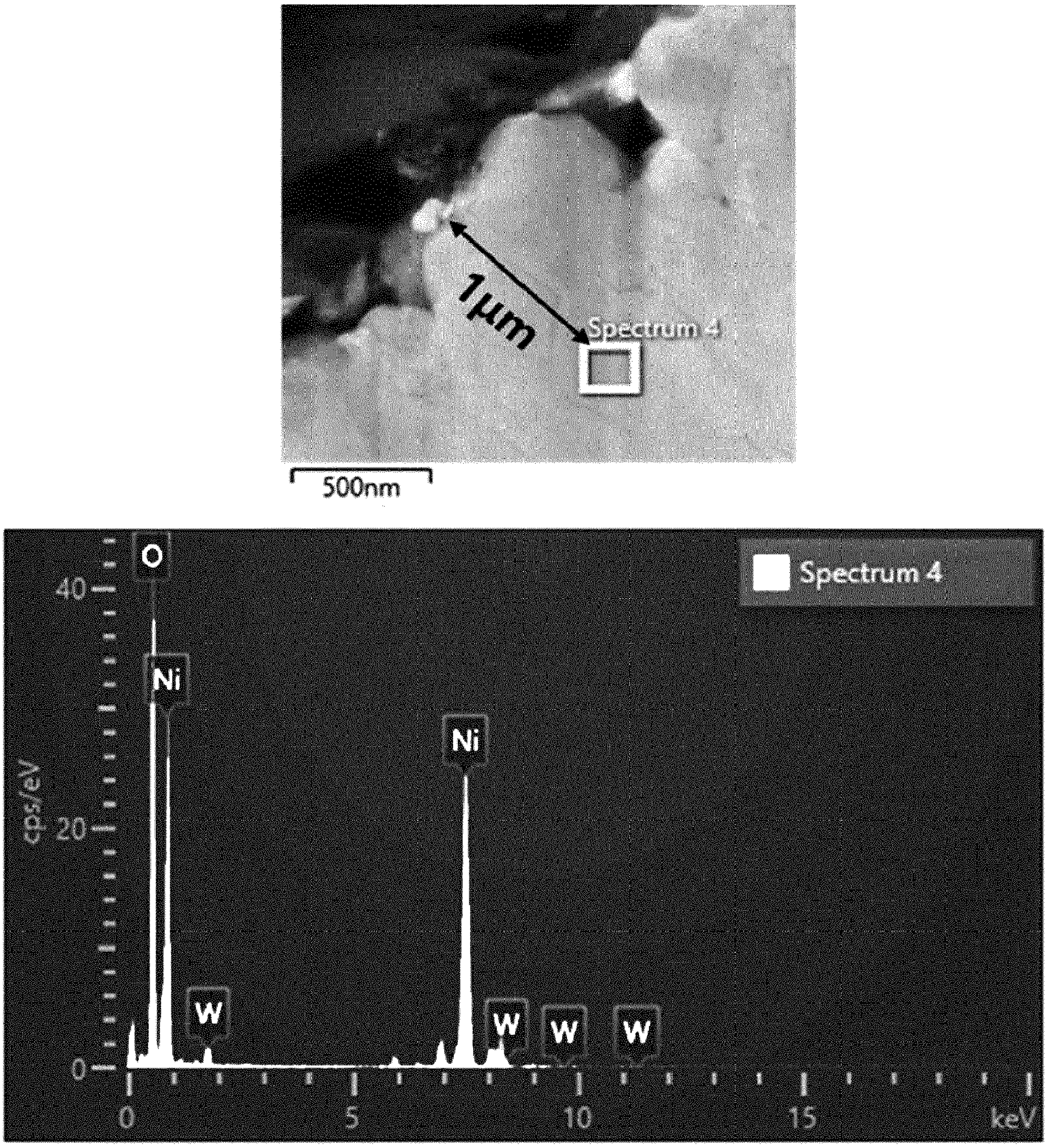
1μm
Spectrum 4
500nm
O
Ni
Ni
W
W
W
W
Spectrum 4
cps/eV
40
20
0
0
5
10
15
keV

FIG. 13

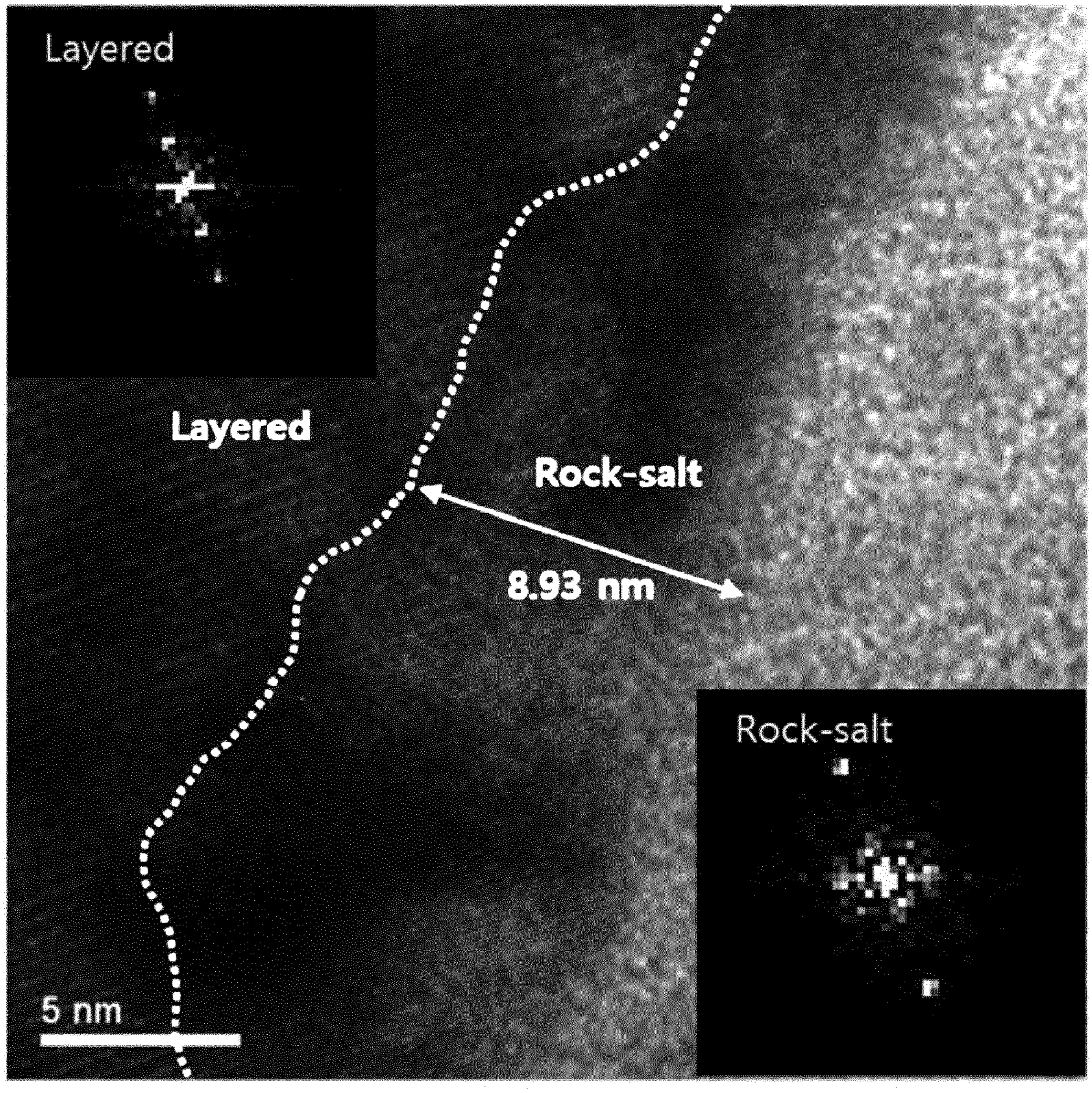

FIG. 14

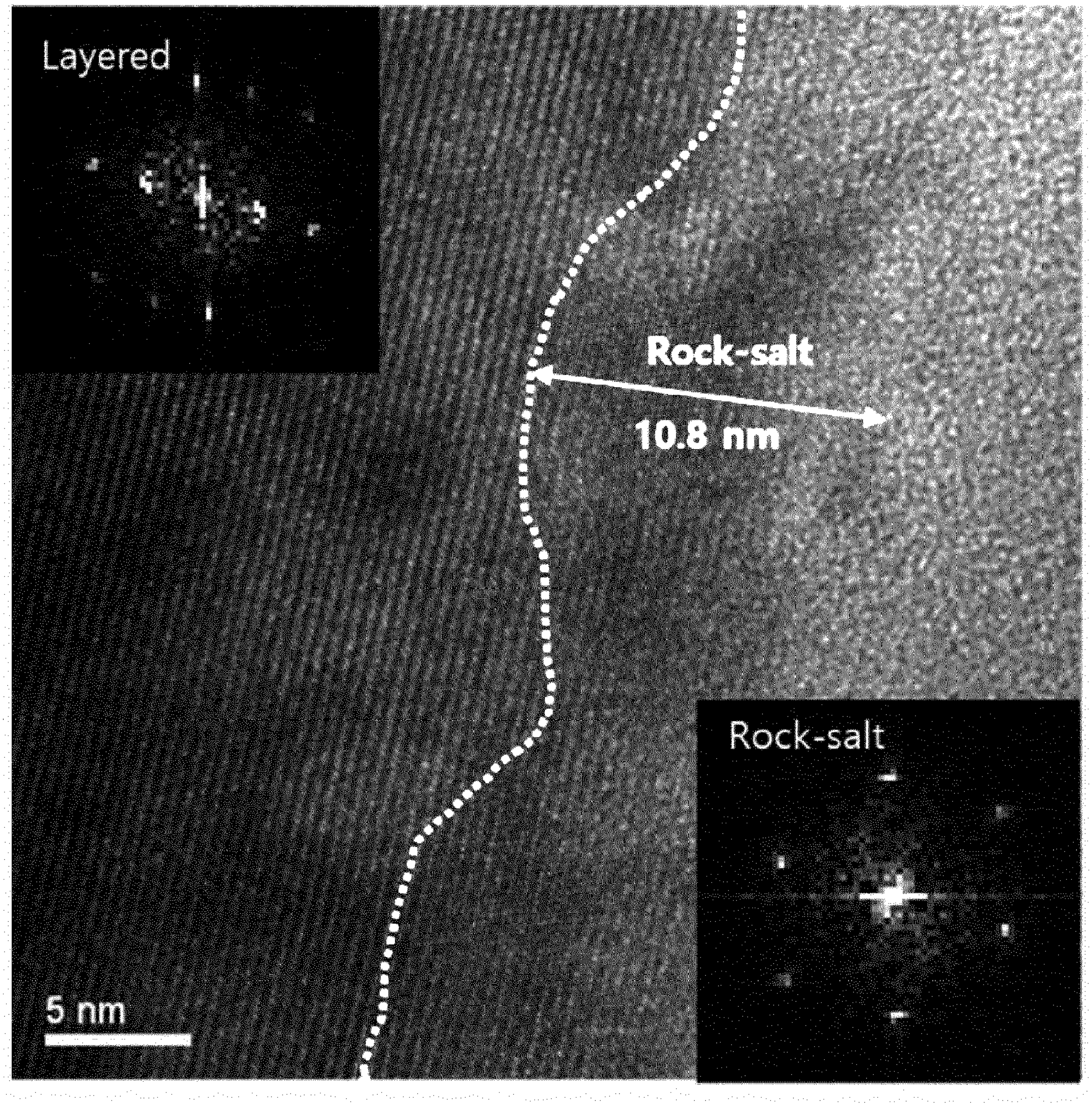

FIG. 15

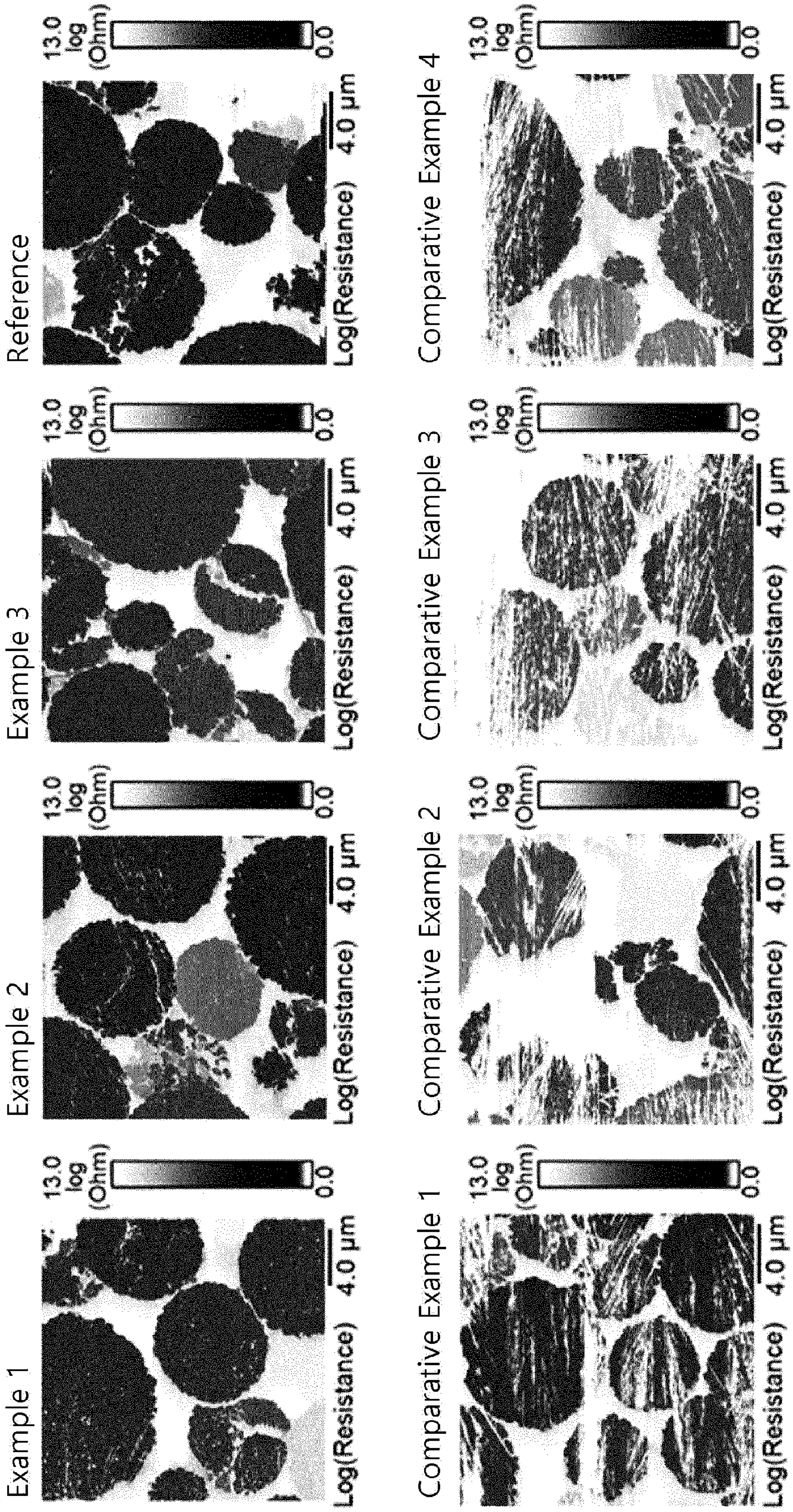
Reference
Example 3
Example 2
Example 1
Comparative Example 4
Comparative Example 3
Comparative Example 2
Comparative Example 1
Log(Resistance)
4.0 µm
13.0
log
(Ohm)
0.0

FIG. 16

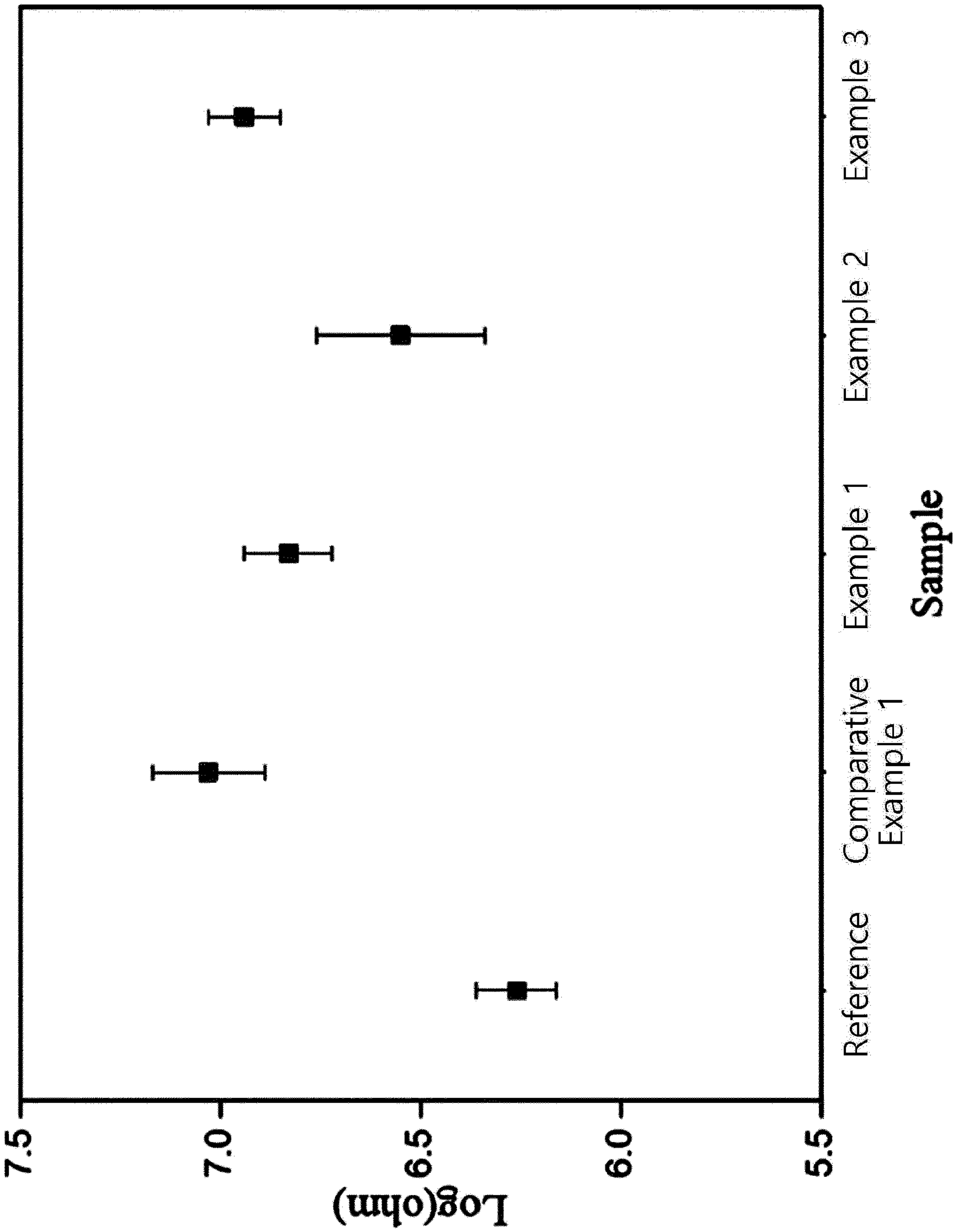
Log(ohm)
7.5
7.0
6.5
6.0
5.5
Reference
Comparative Example 1
Example 1
Example 2
Example 3
Sample

Europäisches Patentamt
European Patent Office
Office européen des brevets

# EUROPEAN SEARCH REPORT

Application Number
EP 24 17 5548

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/209771 A1 (SHIZUKA KENJI [JP] ET AL) 19 August 2010 (2010-08-19)<br>* examples 1-7 *<br>----- | 1-13 | INV.<br>C01G53/00 |
| X | JP 5 359140 B2 (MITSUBISHI CHEM CORP) 4 December 2013 (2013-12-04)<br>* examples 1-7 *<br>----- | 1-13 | |
| A | WO 2017/095133 A1 (LG CHEMICAL LTD [KR]) 8 June 2017 (2017-06-08)<br>* examples 1-5 *<br>----- | 1-13 | |
| A | US 2020/194788 A1 (MITSUMOTO TETSUYA [JP] ET AL) 18 June 2020 (2020-06-18)<br>* examples 1-18 *<br>----- | 1-13 | |

| TECHNICAL FIELDS SEARCHED (IPC) |
|---|
| C01G |

The present search report has been drawn up for all claims

2

| Place of search | Date of completion of the search | Examiner |
|---|---|---|
| Munich | 5 November 2024 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 17 5548

This annex lists the patent family members relating to the patent documents cited in the above-mentioned European search report. The members are as contained in the European Patent Office EDP file on
The European Patent Office is in no way liable for these particulars which are merely given for the purpose of information.

05-11-2024

| Patent document cited in search report | Publication date | Patent family member(s) | Publication date |
|---|---|---|---|
| US 2010209771 A1 | 19-08-2010 | CN 101796672 A | 04-08-2010 |
| | | CN 102769130 A | 07-11-2012 |
| | | EP 2202828 A1 | 30-06-2010 |
| | | EP 2466671 A2 | 20-06-2012 |
| | | KR 20100063041 A | 10-06-2010 |
| | | US 2010209771 A1 | 19-08-2010 |
| | | WO 2009031619 A1 | 12-03-2009 |
| JP 5359140 B2 | 04-12-2013 | JP 5359140 B2 | 04-12-2013 |
| | | JP 2009289726 A | 10-12-2009 |
| WO 2017095133 A1 | 08-06-2017 | NONE | |
| US 2020194788 A1 | 18-06-2020 | CN 111033828 A | 17-04-2020 |
| | | EP 3678231 A1 | 08-07-2020 |
| | | JP 6849812 B2 | 31-03-2021 |
| | | JP WO2019044733 A1 | 19-12-2019 |
| | | KR 20200023452 A | 04-03-2020 |
| | | US 2020194788 A1 | 18-06-2020 |
| | | WO 2019044733 A1 | 07-03-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230063117